(19) Europäisches Patentamt
European Patent Office
Office européen des brevets

(11) **EP 1 718 399 B1**

(12) **EUROPÄISCHE PATENTSCHRIFT**

(45) Veröffentlichungstag und Bekanntmachung des Hinweises auf die Patenterteilung:
**19.08.2009 Patentblatt 2009/34**

(21) Anmeldenummer: **05701410.2**

(22) Anmeldetag: **15.02.2005**

(51) Int Cl.:
**B01D 67/00** (2006.01)     **B01D 69/12** (2006.01)
**B01D 69/02** (2006.01)     **B01D 69/08** (2006.01)

(86) Internationale Anmeldenummer:
**PCT/EP2005/001507**

(87) Internationale Veröffentlichungsnummer:
**WO 2005/082501 (09.09.2005 Gazette 2005/36)**

(54) **INTEGRAL ASYMMETRISCHE MEMBRAN, VERFAHREN ZU IHRER HERSTELLUNG UND IHRE VERWENDUNG**

INTEGRAL ASYMMETRIC MEMBRANE, METHOD FOR PRODUCING SAID MEMBRANE AND USE THEREOF

MEMBRANE ASYMETRIQUE D'UN SEUL TENANT, SON PROCEDE DE PRODUCTION, ET SON UTILISATION

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **19.02.2004 DE 102004008219**

(43) Veröffentlichungstag der Anmeldung:
**08.11.2006 Patentblatt 2006/45**

(73) Patentinhaber: **Membrana GmbH**
**42289 Wuppertal (DE)**

(72) Erfinder: **WECHS, Friedbert**
**63939 Wörth (DE)**

(74) Vertreter: **Schröder, Richard**
**CPW GmbH**
**Kasinostrasse 19-21**
**42103 Wuppertal (DE)**

(56) Entgegenhaltungen:
**US-A- 4 673 504          US-A- 4 814 082**
**US-A- 4 976 859**

EP 1 718 399 B1

**Beschreibung**

Die vorliegende Erfindung betrifft eine integral asymmetrische Membran, ein Verfahren zu ihrer Herstellung und ihre Verwendung.

Integral asymmetrische Membranen und Verfahren zu ihrer Herstellung sind bekannt und z.B. in EP 0 828 553 B1, EP 0361 085 B1 und EP 0168 783 B1 beschrieben. Unter einer integral asymmetrischen Membran wird in den genannten Schriften und in der vorliegenden Erfindung eine Membran mit einer Trennschicht und einer Stützschicht verstanden, wobei Trennschicht und Stützschicht aus dem gleichen Material bestehen und zusammen bei der Membranherstellung ausgebildet werden, wodurch beide Schichten als integrale Einheit miteinander verbunden sind. Derartige Membranen werden für Trennoperationen u.a. im medizinischen Bereich, z.B. in der Hämodialyse und im Lebensmittelbereich, z.B. zur Entalkoholisierung von Getränken eingesetzt.

Im Gegensatz zu integral asymmetrischen Membranen zeigen Composit - Membranen einen mehrschichtigen Aufbau, der dadurch resultiert, dass auf einer bereits fertig hergestellten (mikro)porösen Stützschicht oder Stützmembran durch einen nachträglichen, d.h. separaten Verfahrensschritt, wie z.B. durch Beschichten mit einem filmbildenden Polymer oder durch Pfropfen mit einem dieses Polymer bildenden Monomer, eine dichte Trennschicht aufgebracht wird. Dieser separate Verfahrensschritt entfällt bei der Herstellung einer integral asymmetrischen Membran, bei deren Präparation Trenn- und Stützschicht lediglich durch Inkontaktbringen der ausgeformten membranbildenden Polymerlösung mit einem Fällungsmittelsystem entstehen.

Wesentliches Kriterium bei der Beurteilung einer Membran ist deren Trenncharakterisitik, d.h. deren Trenngrenze und deren Trennschärfe. Dabei wird unter der Trenngrenze die Ausschlußgrenze für ein Molekül oder eine Substanz bestimmter Größe, bedingt durch den Durchmesser der Poren in der Trennschicht der Membran, verstanden. Die Trennschärfe gibt Auskunft über die Selektivität der Membran.

Beispielsweise kommt es bei der Hämodialyse u.a. darauf an, dass das Blut des Dialysepatienten möglichst wenig an hochmolekularen Proteinen, wie z.B. an Albumin (Molekulargewicht 65 000 Dalton) verliert. Die Membran soll also einen Siebkoeffizient SK für Albumin möglichst nahe bei 0,000 haben. Gleichzeitig soll die Membran nicht nur für Harnstoff und für niedermolekulare Urämietoxine, wie z.B. für Creatinin oder Phosphat, sondern auch für sogenannte Mittelmoleküle, d.h. für Proteine mit mittlerem Molekulargewicht, wie z.B. für $\beta_2$-Mikroglobulin möglichst vollständig durchlässig sein. D.h., die Membran soll für $\beta_2$-Mikroglobulin einen SK im Idealfall möglichst nahe bei 1,000 haben.

Diese Anforderungen werden jedoch von den bislang bekannten Membranen nur unzureichend erfüllt. Die bislang bekannten Membranen zeigen für $\beta_2$-Mikrogiobulin oder für Cytochrom C, das häufig als Markermolekül für $\beta_2$-Mikrogiobulin verwendet wird, einen SK, der noch deutlich unter 1 liegt. Gleichzeitig werden oftmals Siebkoeffizienten für Albumin erhalten, die zwar nahe Null liegen, aber immer noch deutlich größer sind als bei der natürlichen Niere. So zeigt eine gemäß Beispiel 13 der EP 828 553 hergestellte Membran einen Siebkoeffizienten für Cytochrom C von 0,75 sowie einen Siebkoeffizienten für Albumin von 0,05. Die in der EP 0 168 783 B1 offenbarten Membranen haben zwar mit 0,005 einen geringen Siebkoeffizienten für Albumin, im Bereich der Mittelmoleküle sind hingegen die erreichten Trennleistungen noch nicht zufriedenstellend.

Es besteht also immer noch ein Bedarf nach integral asymmetrischen Membranen mit verbesserter Trennschärfe.

Daher stellt sich die vorliegende Erfindung die Aufgabe, die eben beschriebenen Nachteile zumindest zu verringern.

Diese Aufgabe wird gelöst durch ein Verfahren zur Herstellung einer integral asymmetrischen Membran mit mindestens einer Trennschicht und einer an die Trennschicht angrenzenden Stützschicht umfassend die Schritte

a) Herstellen einer Spinnlösung, umfassend ein membranbildendes Polymer und ein Lösungsmittelsystem,
b) Umwandeln der Spinnlösung mit einem Formwerkzeug in einen Formkörper mit einer ersten und einer zweiten Oberfläche,
c) Inkontaktbringen der ersten und/oder zweiten Oberfläche mit einem Fällungsmittelsystem, wodurch eine Membran ausgebildet wird, die an der ersten und/oder zweiten Oberfläche eine Trennschicht aufweist,
d) Waschen und ggf. Trocknen der Membran,

**dadurch gekennzeichnet, dass** in Schritt c) das Fällungsmittelsystem einen Polyelektrolyten mit negativen Festladungen umfasst.

Überraschenderweise lassen sich nach dem erfindungsgemäßen Verfahren integral asymmetrische Membranen herstellen, die im Vergleich zu Membranen, die nach bekannten Verfahren hergestellt wurden, eine deutlich erhöhte Trennschärfe zwischen Mittelmolekülen, wie z.B. Cytochrom C und hochmolekularen Proteinen, wie z.B. Albumin zeigen. In bevorzugten Ausführungsformen des erfindungsgemäßen Verfahrens, auf die noch näher eingegangen wird, lassen sich Membranen herstellen, die für Cytochrom C Siebkoeffizienten $SK_{CC}$ mit Werten von bis zu 1,000 und gleichzeitig für Rinderserumalbumin Siebkoeffizienten $SK_{Alb}$ mit Werten herunter bis zu 0,000 aufweisen.

Auf Grund der scharfen Trenncharakteristik und des hervorragendem Rückhalts von Albumin kann sogar die Struktur bzw. Trennschicht der erfindungsgemäßen Membranen offener ausgeführt werden, ohne dass es zu einem unerwünschten Anstieg der Siebkoeffizienten für Rinderserumalbumin kommt. Hierduch lassen sich gleichzeitig die Siebkoeffizienten für Cytochrom C weiter erhöhen, und die Elimination von niedermolekularen Proteinen wie z.B. $\beta_2$-Mikrogiobulin kann weiter verbessert werden. Überraschenderweise liefert daher eine Vielzahl von Ausführungsformen des erfindungsgemäßen Verfahrens integral asymmetrischen Membranen, die nicht nur die soeben beschriebene erhöhte Selektivität sondern auch eine erhöhte Permeabilität in Gestalt einer erhöhten Ultrafiltrationsrate aufweisen, wie in den Beispielen gezeigt wird. Zudem zeigen die nach dem erfindungsgemäßen Verfahren hergestellten integral asymmetrischen Membranen in der Regel einen verbesserten Pyrogenrückhalt. Ferner ist darauf hinzuweisen, dass das erfindungsgemäße Verfahren durch eine verfahrenstechnisch geringfügige Abänderung bekannter Membranherstellungsverfahren durchführbar ist, nämlich durch Einsatz eines ohnehin verwendeten Fällungsmittelsystems, dem lediglich ein Polyelektrolyt mit negativen Festladungen zugesetzt ist.

Im Rahmen der vorliegenden Erfindung bedeutet ein Polyelektrolyt mit negativen Festladungen ein Polymer, das funktionelle Gruppen mit negativen Ladungen enthält oder solche Gruppen in einem hinreichend basischen Medium ausbilden kann, wobei die funktionellen Gruppen kovalent an das Polymer gebunden sind. Dadurch sind zwangsläufig auch die negativen Ladungen kovalent, d.h. fest an das Polymer gebunden.

Wichtig ist, dass der erfindungsgemäß verwendete Polyelektrolyt mit negativen Festladungen tatsächlich ein Polymer mit den vorstehend definierten Eigenschaften ist, also ein Molekül, in dem eine große Zahl, vorzugsweise mindestens einige Hundert und besonders bevorzugt mindestens einige Tausend Monomereinheiten kovalent verknüpft sind, wodurch ein Molekulargewicht resultiert, das vorzugsweise im Bereich von > 7 000 Dalton und besonders bevorzugt im Bereich von > 70 000 Dalton liegt. Der Einsatz niedermolekularer Elektrolyte mit negativen Festladungen im Fällungsmittelsystem, wie z.B. von Zitronensäure, deren drei Säuregruppen drei negative Ionen bilden können, führt zu Membranen, die keine erhöhte Trennschärfe aufweisen. Ebenso ist es wichtig, dass der erfindungsgemäß eingesetzte Polyelektrolyt negative Festladungen besitzt. Setzt man der Innenfüllung Polyelektrolyte mit positiven Festladungen zu, wie z.B. ein Copolymer aus Vinylpyrrolidon und Methacrylamidopropyltrimethylammoniumchlorid, resultieren Membranen, die ebenfalls keine erhöhte Trennschärfe aufweisen.

Als Polyelektrolyt mit negativer Festladung im Fällungsmittelsystem eignen sich z.B. Polymere mit Phenolgruppen. In einer bevorzugten Ausführungsform des erfindungsgemäßen Verfahrens umfasst in Schritt c) das Fällungsmittel einen Polyeletrolyten mit negativen Festladungen, der ausgewählt ist aus der Gruppe der Polyphosphorsäuren, Polysulfonsäuren oder Polycarbonsäuren, von letzteren insbesondere Homo- und Copolymere der Acrylsäure. Besonders wirksam hinsichtlich der Verbesserung des Trennverhaltens der mit dem erfindungsgemäßen Verfahren hergestellten Membran haben sich

- teilvernetzte Acrylsäuren,
- Copolymere aus Methacrylsäure und Methylmethacrylat,
- Copolymere aus Acrylsäure und Vinylpyrrolidon und
- Copolymere aus Acrylsäure, Vinylpyrrolidon und Laurylmethacrylat

erwiesen.

Eine besonders ausgeprägte Erhöhung der Trennschärfe zwischen Mittelmolekülen, wie z.B. Cyctochrom C und hochmolekularen Proteinen, wie z.B. Albumin wird beobachtet, wenn der Polyelektrolyt mit negativen Festladungen so ausgewählt wird, dass er in dem zur Ausbildung der Trennschicht eingesetzten Fällungsmittelsystem vollständig löslich ist, nicht aber in den einzelnen Komponenten des Fällungsmittelsystems.

Ferner wird eine besonders ausgeprägte Erhöhung der Trennschärfe zwischen Mittelmolekülen und hochmolekularen Proteinen beobachtet, wenn der erfindungsgemäß eingesetzte Polyeletrolyt mit negativen Festladungen so ausgewählt wird, dass er in Kontakt mit der Spinnlösung vorzugsweise vollständig ausfällt.

Der Gewichtsanteil des Polyelektrolyten mit negativen Festladungen, bezogen auf das Gewicht des zur Ausbildung der Trennschicht eingesetzten Fällungsmittelsystems, beträgt vorzugsweise 0,01 bis 10 Gew.-% und insbesondere 0,05 bis 1 Gew.-%. Bei einem Gewichtsanteil unterhalb von 0,01 Gew.-% wird keine attraktive Steigerung der o.g. Trennschärfe beobachtet. Bei eine Gewichtsanteil oberhalb von 10 Gew.-% ist die Löslichkeit des Polyelektrolyten oftmals ungenügend und die Ultrafiltrationsrate der resultierenden Membran sinkt.

In Schritt a) des erfindungsgemäßen Verfahrens wird eine Spinnlösung hergestellt, die eines der bekannten membranbildenden Polymeren umfasst. Dabei richtet sich die Auswahl des membranbildenden Polymeren u.a. nach den Medien, in denen die damit hergestellte Membran eingesetzt werden soll. Beispielsweise wird man für ein hydrophobes Trennmedium eine hydrophobes und für ein hydrophiles Trennmedium ein hydrophiles membranbildendes Polymer einsetzen, um die erforderliche Benetzung der Membran mit dem jeweiligen Trennmedium zu gewährleisten. Gleichzeitig muß das membranbildende Polymer im Trennmedium unlöslich sein.

Zur Herstellung von Membranen für hydrophile Trennmedien, wozu beispielsweise auch die in der Hämodialyse verwendeten Medien gehören, setzt man in Schritt a) des erfindungsgemäßen Verfahrens als membranbildendes Polymer vorzugsweise ein cellulosisches Polymer ein, d.h. Cellulose oder ein Cellulosederivat wie z.B.

Benzylcellulose, Cellulosediacetat oder Cellulosetriacetat oder Diethylaminoethylcellulose oder Mischungen dieser Polymere.

In einer weiteren bevorzugten Ausführungsform des erfindungsgemäßen Verfahrens wird in Schritt a) als membranbildendes Polymer ein synthetisches Polymer eingesetzt, das besonders bevorzugt aus der Gruppe der Polysulfone, Polyphenylensulfone, Polyethersulfone, Polyarylethersulfone, Polyimide, Polyetherimide, Polycarbonate, Polyetherketone und Polyphenylensulfide oder aus der Gruppe der Modifikationen der genannten Polymere oder aus der Gruppe der Mischungen der genannten Polymere oder aus der Gruppe der Copolymeren aus den Monomeren der genannten Polymere ausgewählt ist.

Die Konzentration des membranbildenden synthetischen Polymeren in der Spinnlösung liegt zweckmäßigerweise im Bereich von 12 bis 30 Gew.-%, bevorzugt im Bereich von 15 bis 25 Gew.-%. Unterhalb von 12 Gew.-% ergeben sich Nachteile bei der Durchführung des Spinnprozesses und hinsichtlich der mechanischen Stabilität der resultierenden Membran. Oberhalb von 30 Gew.-% zeigt die resultierende Membran eine zu dichte Struktur und folglich eine zu geringe Permeabilität.

Da die vorstehend genannten membranbildenden synthetischen Polymeren mehr oder weniger stark ausgeprägt hydrophob sind, eignen sich diese Polymere zur Herstellung von Membranen für den Einsatz in hydrophoben Trennmedien, welche die Membran nicht lösen.

Zur Herstellung von Membranen, die in hydrophilen Trennmedien eingesetzt werden sollen, kann man in Schritt a) des erfindungsgemäßen Verfahrens entweder ein (Co)Polymer einsetzen, das als solches durch das Trennmedium ausreichend benetzt wird, ohne sich darin aufzulösen, wie z.B. ein hydrophiles Polymer aus der Gruppe der Polyamide, Polyvinylalkohole, Ethylen-Vinylalkohol Copolymere, Polyether-Polyamid Blockcopolymere, Polyethylenoxid-Polycarbonat Blockcopolymere oder ein modifiziertes ursprünglich hydrophiles Polymer, wie z.B. ein mit Sulfonsäuregruppen modifiziertes Polysulfon oder Polyethersulfon oder man setzt in einer weiteren bevorzugten Ausführungsform des erfindungsgemäßen Verfahrens zur Herstellung der Spinnlösung zusätzlich ein hydrophiles Polymer ein, welches einerseits mit dem membranbildenden Polymeren kompatibel ist und andererseits gewährleistet, dass die resultierende Membran im hydrophilen Trennmedium ausreichend benetzbar ist. Derartige hydrophile Polymere werden vorzugsweise aus der Gruppe der Polyvinylpyrrolidone, Polyethylenglykole, Polyvinylalkohole, Polyglykolmonoester, Polysorbitate, wie z.B. Polyoxyethylensorbitanmonooleat oder Carboxymethylcellulose ausgewählt. Auch kann ein Copolymer aus den Bausteinen der genannten hydrophilen Polymere eingesetzt werden. Ferner kann ein Gemisch aus den genannten hydrophilen Polymeren eingesetzt werden, wobei die Polymere unterschiedliche Molekulargewichte haben können, die sich z.B. um den Faktor 5 oder mehr unterscheiden. Besonders bevorzugt wird ein Polyvinylpyrrolidon als zusätzliches hydrophiles Polymer zur Herstellung der Spinnlösung eingesetzt.

Die bei der Herstellung der Spinnlösung eingesetzten zusätzlichen hydrophilen Polymere haben neben ihrer die Benetzung im hydrophilen Trennmedium gewährleistenden Funktion auch eine die Viskosität der Spinnlösung erhöhende Wirkung. Ferner können sie als Nukleierungsmittel und/oder als Porenbildner bei der Ausbildung der Membranstruktur fungieren. Die zusätzlich eingesetzten hydrophilen Polymere werden in einer Konzentration von 0,1 bis 30 Gew.-%, bevorzugt von 1 bis 25 Gew.-% und besonders bevorzugt von 5 bis 17 Gew.-% jeweils bezogen auf das Gewicht der Spinnlösung in Schritt a) des erfindungsgemäßen Verfahrens eingesetzt. Ein wesentlicher Anteil des zusätzlichen hydophilen Polymeren wird bei der erfindungsgemäßen Herstellung der Membran in Schritt d) während der Extraktion ausgewaschen. Wegen der in einem hydrophilen Trennmedium erforderlichen Benetzbarkeit der resultierenden Membran ist es jedoch erforderlich, dass ein bestimmter Anteil des zusätzlichen hydrophilen Polymers in der resultierenden Membran verbleibt. Dieser Anteil liegt vorzugsweise zwischen 1 und 15 Gew.-% und besonders bevorzugt zwischen 3 bis 10 Gew.-%, jeweils bezogen auf das Gewicht der fertigen Membran.

Das zur Herstellung der Spinnlösung verwendete Lösungsmittelsystem ist auf das membranbildende Polymer abzustimmen. Wird in Schritt a) des erfindungsgemäßen Verfahrens ein hydrophobes synthetisches Polymer als membranbildendes Polymer und ein zusätzliches hydrophiles Polymer eingesetzt, umfasst das Lösungsmittelsystem erfindungsgemäß z.B. polare aprotische Lösungsmittel, wie etwa ε-Caprolactam, Dimethylformamid, Dimethylacetamid, Dimethylsulfoxid oder N-Methylpyrrolidon oder deren Mischungen. Ferner kann das Lösungsmittelsystem Cosolventien enthalten, wie etwa im Fall von ε-Caprolactam γ-Butyrolacton, Propylencarbonat oder ein Polyalkylenglykol. Darüber hinaus kann das Lösungsmittelsystem Nichtlöser für das membranbildende Polymere enthalten, wie z.B. Wasser, Glycerin oder niedermolekulare Alkohole, wie etwa Ethanol oder Isopropanol.

Wenn mit dem erfindungsgemäßen Verfahren Flachmembranen hergestellt werden sollen, wird in Schritt b) die Spinnlösung nach Entgasung und Filtrierung zur Entfernung nicht gelöster Partikel mit einem für die Herstellung von Flachmembranen bekannten Formwerkzeug, z.B. mit einer Rakel, in einen Formkörper mit einer ersten Oberfläche, d.h. der Oberseite, und mit einer zweiten Oberfläche, d.h. der Unterseite, umgewandelt. Anschließend wird in Schritt c) des erfindungsgemäßen Verfahrens der Formkörper mit seiner Ober- und/oder Unterseite mit einem Fällungsmittelsystem in Kontakt gebracht, welches einen Polyelektrolyten mit negativen Festladungen umfasst, wodurch eine integral asymmetrische Fachmembran entsteht, die auf ihrer Ober- und/oder Unterseite eine Trennschicht aufweist. Schließlich wird die integral asymmetrische Membran in Schritt d) des erfindungsgemäßen Verfahrens gewaschen, zur Entfernung von Resten des Lösungsmittelsystems und weiterer gelöster organischer Bestandteile extrahiert und ggf. getrocknet.

Mit dem erfindungsgemäßen Verfahren werden vorzugsweise Hohlfasermembranen hergestellt. Daher beziehen sich die folgenden Erläuterungen auf die Herstellung von Hohlfasermembranen. Der Fachmann ist jedoch ohne weiteres in der Lage, die im folgenden beschriebenen Herstellungsprozeduren in die bei der Herstellung von Flachmembranen erforderlichen Prozeduren zu übersetzen.

Bei der bevorzugten Herstellung von Hohlfasermembranen wird als Formwerkzeug in Schritt b) des erfindungsgemäßen Verfahrens z.B. eine übliche Hohlfadendüse eingesetzt, durch deren Ringspalt die zuvor entgaste und filtrierte Spinnlösung in einen Hohlfaser-Formkörper mit einer dem Lumen zugewandten Innenoberfläche als erster Oberfläche und einer Außenoberfläche als zweiter Oberfläche umgewandelt wird. Ferner kann in Schritt b) die Spinnlösung in einen Hohlfaser-Formkörper umgewandelt werden, der mehrere Innenseiten aufweist.

In einer bevorzugten Ausführungsform des erfindungsgemäßen Verfahrens wird durch die in der Hohlfadendüse koaxial zum Ringspalt angeordnete zentrale Düsenöffnung ein Fällungsmittelsystem für das membranbildende Polymer extrudiert, wobei das Fällungsmittelsystem zugleich die Innenfüllung ist, die das Lumen des Hohlfadens stabilisiert. Nach Verlassen der Hohlfadendüse wird in Schritt c) dieses Fällungsmittelsystem mit der Innenoberfläche des Hohlfaser-Formkörpers in Kontakt gebracht, wodurch eine integral asymmetrische Hohlfasermembran mit lumenseitiger Trennschicht ausgebildet wird.

Die Innenfüllung umfasst eines der zuvor genannten Lösungsmittel, vorzugsweise das Lösungsmittel, das auch zur Herstellung der Spinnlösung verwendet wurde. Alternativ kann die Innenfüllung das zur Herstellung der Spinnlösung eingesetzte Lösungsmittelsystem umfassen. In jedem Fall enthält die Innenfüllung zusätzlich einen Nichtlöser, der die Koagulation des membranbildenden Polymeren und somit das Entstehen der lumenseitigen Trennschicht auslöst und das in der Spinnlösung ggf. vorhandene weitere hydrophile Polymer löst. Wenn in dem zur Herstellung der Spinnlösung verwendeten Lösungsmittelsystem ein Nichtlöser enthalten ist, kann die Innenfüllung denselben Nichtlöser enthalten, wobei selbstverständlich zur Erzielung einer ausreichenden Fällungswirkung die Konzentration des Nichtlösers in der Innenfüllung größer ist als im Lösungsmittelsystem. Jedoch kann für die Innenfüllung auch ein anderer Nichtlöser eingesetzt werden als im Lösungsmittelsystem, das zur Herstellung der Spinnlösung verwendet wurde. Schließlich kann im Fällungsmittelsystem auch ein Gemisch verschiedener Nichtlöser eingesetzt werden. Erfindungsgemäß umfasst die in Schritt c) eingesetzte und als Fällungsmittelsystem wirkende Innenfüllung einen Polyelektrolyten mit negativen Festladungen.

Abhängig von der Struktur, die für die an die lumenseitige Trennschicht angrenzende Stützschicht bzw. für die Außenoberfläche der Hohlfasermembran gewünscht wird, durchläuft die Hohlfaser in einer bevorzugten Ausführungsform des erfindungsgemäßen Verfahrens nach ihrem Austritt aus der Hohlfadendüse zuerst einen Luftspalt, bevor die Hohlfaser in ein äußeres Koagulationsbad eintaucht und durch dieses hindurchgeleitet wird. Dabei ist der Luftspalt besonders bevorzugt mit Wasserdampf klimatisiert und temperiert, um hierdurch definierte Bedingungen vor Beginn einer Koagulation an der Außenseite der Hohlfaser einzustellen, z.B. durch eine dosierte Aufnahme von Nichtlöser aus der klimatisierten Atmosphäre, wodurch eine verzögerte Koagulation stattfindet. Die diffusiv induzierte Koagulation kann dann im äußeren Koagulationsbad, das vorzugsweise temperiert und vorzugsweise ein wässriges Bad ist, vervollständigt und die Membranstruktur fixiert werden. Wenn die Hohlfaser vor Eintauchen in das äußere Koagulationsbad aufgrund der Fällwirkung der Innenflüssigkeit von innen nach außen durchgefällt ist, hat das äußere Koagulationsbad nur noch die Aufgabe, die Membranstruktur zu fixieren und bereits für die Extraktion der Hohlfaser zu sorgen. Anstelle der Verwendung eines die Koagulation an der Außenseite der Hohlfaser verlangsamenden klimatisierten Luftspalts kann auch direkt in ein äußeres Koagulationsbad extrudiert werden, dass eine geringere Fällwirkungswirkung ausübt als die Innenfüllung.

In den vorstehend beschriebenen Ausführungsformen des erfindungsgemäßen Verfahrens wird der Polyelektrolyt mit negativen Festladungen der Innenfüllung zugesetzt, so dass eine integral asymmetrische Hohlfasermembran mit einer lumenseitigen Trennschicht resultiert, welche den Polyelektrolyten mit negativen Festladungen physikalisch gebunden enthält.

Jedoch ist es mit dem erfindungsgemäßen Verfahren ebenso möglich, die in einen Hohlfaden-Formkörper umgewandelte Spinnlösung mit Hilfe des äußeren Koagulationsbades von außen nach innen durchzufällen, wobei das äußere Koagulationsbad den Polyelektrolyten mit negativen Festladungen gelöst enthält. In diesem Fall entsteht eine integral asymmetrische Hohlfasermembran mit außenseitiger Trennschicht, in welcher ein Polyelektrolyt mit negativen Festladungen physikalisch gebunden enthalten ist.

Ferner kann man mit Hilfe des erfindungsgemäßen Verfahrens die in einen Hohlfaden-Formkörper umgewandelte Spinnlösung gleichzeitig sowohl mit Hilfe der Innenfüllung als auch mit der Außenfüllung in Kontakt gebracht und koaguliert werden, wobei sowohl in der Innenfüllung als auch im äußeren Koagulationsbad ein Polyelektrolyt mit negativen Festladungen gelöst ist. Dabei kann es sich im äußeren Koagulationsbad um den gleichen Polyelektrolyten mit negativen Festladungen handeln wie in der Innenfüllung, wobei die Konzentration des Polyelektrolyten im äußeren Koagulationsbad und in der Innenfüllung innerhalb der bereits genannten Grenzen liegt und wobei die Polyelektrolyt-Konzentration im äußernen Koagulationsbad und in der Innenfüllung gleich oder verschieden sein kann. Ebenso kann im äußeren Koagulationsbad ein Polyelektrolyt mit negativen Festladungen gelöst sein, der verschieden ist von dem in der Innenflüssigkeit gelösten Polyelektrolyten mit negativen Festladungen, wobei die Konzentration des Polyelektrolyten im äußeren Koagulationsbad und in der Innenflüssigkeit innerhalb der genannten Grenzen liegt und gleich oder verschieden sein kann. Es resultieren integral asymmetrische Hohlfasermembranen mit einer lumenseitigen und mit einer außenliegenden Trennschicht, wobei die genannten Trennschichten den gleichen oder verschiedene Polyelektrolyte mit negativen Festladungen physikalische gebunden enthalten.

In jeden Fall ist darauf zu achten, dass gemäß der Lehre der Schritte b) und c) des erfindungsgemäßen Verfahrens die in einen Hohlfaden-Formkörper umgewandelte Spinnlösung mit einer koagulierend wirkenden Innenfüllung und/oder mit einem äußeren Koagulationsbad in Kontakt gebracht wird, wobei die Innenfüllung und/oder das äußere Koagulationsbad einen Polyelektrolyten mit negativen Festladungen enthält.

Im Anschluß an die Koagulation und die Fixierung der integral asymmetrischen Struktur wird die Membran in Schritt d) des erfindungsgemäßen Verfahrens extrahiert, ggf. getrocknet und ggf. texturiert, um die Austauscheigenschaften der Hohlfasermembran im Bündel zu verbessern. Schließlich wird die Hohlfasermembran mit üblichen Verfahren z.B. auf eine Spule gewickelt oder zu Bündeln mit geeigneter Fadenzahl und Länge verarbeitet. Vor der Herstellung der Bündel können zu den Hohlfasermembranen auch Beilegfäden, z.B. in Form von Multifilamentgarnen gegeben werden, um so für eine Beabstandung der Hohlfasermembranen untereinander und für eine bessere Umströmbarkeit der einzelnen Hohlfasermembranen zu sorgen.

Die der Erfindung zugrunde liegende Aufgabe wird ferner gelöst durch eine integral asymmetrische Membran mit mindestens einer Trennschicht und einer Stützschicht, die dadurch gekennzeichnet ist, dass in der Trennschicht ein Polyelektrolyt mit negativen Festladungen physikalisch gebunden ist und dass die Stützschicht frei von Polyelektrolyt ist.

Eine derartige Membran zeigt überraschenderweise eine im Vergleich zu bislang bekannten Membranen deutlich erhöhte Trennschärfe zwischen Mittelmolekülen wie z.B. Cytochrom C und hochmolekularen Proteinen, wie z.B. Albumin. In bevorzugten Ausführungsformen, die in den Beispielen detailliert beschreiben werden, zeigt die erfindungsgemäße Membran für Cytochrom C Siebkoeffizienten $SK_{CC}$ mit Werten oberhalb von 0,9 und gleichzeitig für Rinderserumalbumin Siebkoeffizienten $SK_{Alb}$ mit Werten unterhalb von 0,003. Ferner zeigt sich, dass nicht nur die soeben beschriebene erhöhte Selektivität sondern vielfach auch eine erhöhte Permeabilität in Gestalt einer erhöhten Ultrafiltrationsrate zu beobachten ist. Zudem zeigen die erfindungsgemäßen integral asymmetrischen Membranen einen verbesserten Pyrogenrückhalt.

Die erfindungsgemäße Membran kann als Flach- oder als Hohlfasermembran vorliegen, wobei für die Polymere, welche die Membran bilden, für die ggf. vorhandenen zusätzlichen hydrophilen Polymeren und für den Polyelektrolyten mit negativen Festladungen sinngemäß das bereits bei der Beschreibung des erfindungsgemäßen Verfahrens Gesagte gilt.

Somit umfasst die erfindungsgemäße integral asymmetrische Membran Flachmembranen mit ein- und/oder beidseitiger Trennschicht und darin enthaltenem Polyelektrolyten mit negativen Festladungen und Hohlfasermembranen mit lumenseitiger und/oder außenseitiger Trennschicht und darin enthaltenem Polyelektrolyten mit negativen Festladungen.

Die erfindungsgemäße Membran kennzeichnet, dass der Polyelektrolyt mit negativen Festladungen in der Trennschicht bzw. in den Trennschichten der Membran physikalisch gebunden ist. Dies bedeutet, dass besagter Polyelektrolyt nicht chemisch in der Trennschicht der erfindungsgemäßen Membran gebunden ist. Die physikalische Bindung des Polyelektrolyten in der Trennschicht ist so stabil, dass weder das bei der naßchemischen Herstellung der Membran unvermeidliche Waschen, Extrahieren und Sterilisieren noch der Einsatz der erfindungsgemäßen Membran in Trennmedien, wie zum Beispiel in den für die Hämodialyse typischen Trennmedien zu einem erheblichen Verlust der Membran an Polyelektrolyt oder gar zu einer an Polyelektrolyt freien Membran führt. Ohne sich auf die folgende Erklärung festlegen lassen zu wollen wird vermutet, dass Verhakungen und Verschlaufungen der Polymerketten des Polyelektrolyten mit den Polymerketten des membranbildenden Polymeren, wie sie z.B. während des vorstehend beschriebenen erfindungsgemäßen Verfahrens dadurch zustande kommen, dass der in Schritt b) gebildete lösungsmittelfeuchte Formkörper in Schritt c) mit dem polyelektrolythaltigen Fällungsmittel in Kontakt gebracht wird, den Polyelektrolyten stabil in der Trennschicht der erfindungsgemäßen Membran verankern.

Jedenfalls lassen sich die Polyelektrolyte mit negativen Festladungen in der erfindungsgemäßen Membran bzw. in der nach dem erfindungsgemäßen Verfahren hergestellten Membran nach deren Extraktion nachweisen. Dieser Nachweis des Polyelektrolyten in der Membrantrennschicht gelingt z.B. mit ESCA, IR-Spektroskopie, wie z.B. FTIR-ATR oder durch Umsetzung der sauren Polyelektrolyte mit basischen Farbstoffen. Vermutlich sorgen die in der Trennschicht der erfindungsgemäßen Membran physikalisch verankerten Polyelektrolyte mit negativer Festladung dafür, dass die erfindungsgemäße integral asymmetrische Membran vor und nach ihrer Extraktion unverändert hohe Werte der Selektivität z.B. für die Cytochrom C/Albumin - Trennung zeigt. Gleiches gilt für die nach dem erfindungsgemäßen Verfahren hergestellte Membran.

Im Gegensatz dazu bewirkt der nicht erfindungsgemäße Einsatz der Polyelektrolyte mit negativen Festladungen auf bereits vollständig durchgefällte Membranen, in denen eine Verhakung und Verschlaufung der Polymerketten des Polyelektrolyten mit den Polymerketten des membranbildenden Polymeren kaum noch möglich ist, dass keinerlei Erhöhung der Trennschärfe auftritt.

In einer weiteren bevorzugten Ausführungsform ist die erfindungsgemäße integral asymmetrische Membran eine Hohlfasermembran mit lumenseitiger Trennschicht. die besonders bevorzugt 0,1 bis 2 $\mu$m dick ist. Mittels des erfindungsgemäßen Verfahrens lassen sich integral asymmetrische Membranen mit Trennschicht für Anwendungen in der Nanofiltration oder Ultrafiltration bis hin zum unteren Bereich der Mikrofiltration herstellen. Demzufolge handelt es sich bei der erfindungsgemäßen Membran um eine Nanofiltrationsmembran, eine Ultrafiltrationsmembran oder um eine Mikrofiltrationsmembran.

Die erfindungsgemäße Membran bzw. die nach dem erfindungsgemäßen Verfahren hergestellte Membran läßt sich vorteilhaft zur Trennung von Proteinen verwenden, wie z.B. zur Trennung von Cytochrom C, welches, wie bereits erwähnt, als Markersubstanz für β-2-Mikrogiobulin dient, und Albumin. Somit läßt sich die erfindungsgemäße Membran bzw. die nach dem erfindungsgemäßen Verfahren hergestellte Membran vorteilhaft im Bereich der Hämodialyse, der Hämodiafiltration oder der Hemofiltration einsetzen, zumal die erfindungsgemäßen Membranen ihre erhöhte Selektivität oftmals mit erhöhten Ultrafiltrationsraten kombinieren.

Die erfindungsgemäße Membran bzw. die nach dem erfindungsgemäßen Verfahren hergestellte Membran läßt sich ferner vorteilhaft zur chemischen Modifizierung mit einem Agens verwenden, das mit dem Polyelektrolyten mit negativen Festladungen reagiert. Damit lassen sich chemisch inerte Membranen, wie z.B. Polyethersulfonmembranen, auf ebenso einfache wie spezifische Weise zu Affinitätsmembranen umwandeln.

Die Erfindung wird anhand der im folgenden beschriebenen Beispiele näher erläutert. Darin wurden folgende Methoden zur Charakterisierung der erhaltenen Membranen angewendet:

**Ultrafiltrationsrate in Albumin-Lösung UFR$_{ALB}$,**

**Siebkoeffizienten für Cytochrom C SK$_{CC}$ und Albumin SK$_{ALB}$**

Die Messung der o.g. Membraneigenschaften erfolgt in Anlehnung an DIN 58 353 Teil 2. Als Prüflösung dient eine phosphatgepufferte Kochsalzlösung (PBS) mit 50 g/l Rinderserumalbumin (BSA) und 100 mg/l Cytochrom C. Die Rezeptur der PBS-Lösung entstammt dem Deutschen Arzneimittelbuch (DAB 10,1. Nachtrag 1992 VII.I.3 "Phosphatpufferlösung pH 7,4, natriumchloridhaltige R"). Die Messung erfolgt bei 37 $\pm$ 1 °C an Hohlfasermembranmodulen mit einer effektiven Membranfläche von ca. 250 cm$^2$ und einer effektiven Hohlfasermembranlänge von 180 mm. Über eine erste Pumpe an der Einlaufseite des Membranmoduls wird ein Volumenstrom $Q_B$ = 200 ml/(min·m$^2$) durch die Hohlfasermembran eingestellt. Mit einer zweiten langsamer fördernden Pumpe an der Auslaufseite des Membranmoduls wird je nach Membranpermeabilität, d.h. je nach UFR$_{ALB}$ ein Filtratfluß $Q_F$ = 30 ml/(min·m$^2$) oder $Q_F$ = 10 ml/(min·m$^2$) eingestellt, wobei bis zu einer UFR$_{ALB}$ von ca. 25 [ml/(h·m$^2$-mmHg)] ein Filtratfluß $Q_F$ = 10 ml/(min·m$^2$) eingestellt wird. Der sich als Folge von $Q_F$ einstellende Transmembrandruck TMP wird während der Messung erfasst.

UFR$_{ALB}$ wird nach der Formel

$$UFR_{ALB} = (Q_F \cdot 60) / (TMP \cdot 0{,}75) \quad [ml/(h \cdot m^2 \cdot mmHg)]$$

berechnet, wobei $Q_F$ den auf 1 m$^2$ effektive Membranfläche bezogenen Filtratfluss in [ml/(min·m$^2$)] und TMP den Transmembrandruck in [hPa] bedeuten.

Die Bestimmung des Siebkoeffizienten SK erfolgt nach der Formel

$$SK = 2 \cdot c_F / (c_{ST} + c_R),$$

wobei $c_F$ die Konzentration des Albumins bzw. des Cytochrom C im Filtrat, $c_{ST}$ die Stammkonzentration des Albumins bzw. des Cytochrom C, d.h. 50 g/l bzw. 100 mg/l und $c_R$ die Konzentration des Albumins bzw. des Cytochrom C im Retentat bedeuten.

Die Bestimmung der Albumin-Konzentration erfolgt nach einer Methode von Boehringer Mannheim mit einer Extinktionsmessung, die z.B. in einem Hitachi 704 Automatic Analyzer erfolgt. Als Testprinzip wird eine Bromcresolgrün-Methode verwendet, die gewährleistet, dass das Cytochrom C die analytische Bestimmung nicht beeinflusst.

Die Bestimmung der Cytochrom C-Konzentration erfolgt durch Messung der Extinktion $E_{415}$ bei $\lambda$ = 415 nm, die ebenfalls in einem Automatic Analyzer, wie z.B. dem Hitachi 704 durchgeführt werden kann. Da Albumin ebenfalls bei $\lambda$ = 415 nm absorbiert, wird die Extinktion von Albumin bei $\lambda$ = 415 nm im Konzentrationsbereich $c_{ALB}$ von 0 bis ca. 80 g/l gemessen und die Steigung $m_{ALB415}$ der Geraden bestimmt, die beim Auftragen der Extinktion gegen die Konzentration resultiert.

Die dem Cytochrom C entsprechende korrigierte Extinktion $E_{415korr}$ wird mit der Formel

$$E_{415korr} = E_{415} - c_{ALB} \cdot m_{ALB415}$$

bestimmt.

## Vergleichsbeispiel 1

Zur Herstellung einer Spinnlösung werden
19,50 Gew.% Polyethersulfon (Ultrason E 6020, Fa. BASF),
13,65 Gew.% Polyvinylpyrrolidon (PVP K30, Fa. ISP),
31,75 Gew.% ε-Caprolactam,
31,75 Gew.% γ-Butyrolacton und
3,35 Gew.% Glycerin
bei einer Temperatur von ca. 100 °C intensiv gemischt. Die resultierende Lösung wird auf ca. 60 °C abgekühlt, entgast, filtriert und dem Ringspalt einer Hohlfadendüse zugeführt, die auf 67 °C temperiert ist. Zur Ausbildung von Lumen und innenliegender Trennschicht wird durch die Düsennadel der Hohlfadendüse eine Innenfüllung gefördert, die aus ε-Caprolactam/Glycerin/Wasser im Gewichtsverhältnis 61:4:35 besteht. Die ausgeformte Hohlfadenmembran wird durch einen Klimakanal (Klima: ca. 55 °C; 80 % relative Luftfeuchte) geführt, in einem auf ca. 75 °C temperierten Wasser enthaltenden Fällbad ausgefällt und fixiert, mit ca. 90 °C warmem Wasser gewaschen und getrocknet. Es resultiert eine Hohlfadenmembran mit einem Lumendurchmesser von ca. 0,2 mm und einer Wanddicke von ca. 0,03 mm.

## Beispiel 1a

Es wird eine Hohlfadenmembran wie in Vergleichsbeispiel 1 hergestellt, jedoch mit dem Unterschied, dass in der Innenfüllung bezogen auf ihr Gewicht zusätzlich 0,25 Gew.% des Polyelektrolyten Acrylidone ACP 1005 (Fa. ISP) gelöst ist. Acrylidone ACP 1005 ist ein Copolymer aus 75 % Acrylsäure und 25 % Vinylpyrrolidon. Zur Herstellung der Innenfüllung wird zuerst das Gemisch aus ε-Caprolactam und Wasser vorgelegt, in diesem Gemisch das Acrylidone ACP 1005 gelöst und schließlich Glycerin zugegeben.

## Beispiel 1b

Es wird eine Hohlfadenmembran wie in Vergleichsbeispiel 1 hergestellt, jedoch mit dem Unterschied, dass in der Innenfüllung bezogen auf ihr Gewicht zusätzlich 0,25 Gew.% des Polyelektrolyten Rohagit S hv (Fa. Degusssa/Röhm) gelöst ist. Rohagit S hv ist ein Copolymer aus Methacrylsäure und Methylmethacrylat. Zur Herstellung der Innenfüllung wird zuerst das Gemisch aus ε-Caprolactam/Wasser vorgelegt, in diesem Gemisch das Rohagit S hv gelöst und schließlich Glycerin zugegeben.

In Tabelle 1 sind $UFR_{ALB}$ ($Q_F$ = 30 ml/(min·m$^2$)), $SK_{CC}$ und $SK_{ALB}$ der Hohlfadenmembranen aus Vergleichsbeispiel 1 und aus den Beispielen 1a und b zusammengefasst.

Tabelle 1

| Membran aus | Polyelektrolyt in der Innenfüllung | $UFR_{ALB}$ ml/(h·m$^2$·mmHg) | $SK_{ALB}$ | $SK_{CC}$ |
|---|---|---|---|---|
| Vergleichsbeispiel 1 | - | 37,9 | 0,009 | 0,730 |
| Beispiel 1a | 0,25 Gew.% ACP 1005 | 35,1 | 0,001 | 0,950 |
| Beispiel 1b | 0,25 Gew.% Rohagit S hv | 38,7 | 0,001 | 0,952 |

Wie Tabelle 1 zeigt, entstehen durch den Zusatz der Polyelektrolyte zur Innenfüllung Hohlfadenmembranen mit beträchtlich erhöhter Selektivität für die Trennung von Albumin und Cytochrom C bei in etwa gleicher Ultrafiltrationsrate.

**Vergleichsbeispiel 2**

Zur Herstellung einer Spinnlösung werden
19,0 Gew.% Polyethersulfon (Ultrason E 6020, Fa. BASF),
13,68 Gew.% Polyvinylpyrrolidon (PVP K30, Fa. ISP),
31,98 Gew.% $\varepsilon$-Caprolactam,
31,98 Gew.% $\gamma$-Butyrolacton und
3,36 Gew.% Glycerin
bei einer Temperatur von ca. 100 °C intensiv gemischt. Die resultierende Lösung wird auf ca. 60 °C abgekühlt, entgast, filtriert und dem Ringspalt einer Hohlfadendüse zugeführt, die auf 62 °C temperiert ist. Zur Ausbildung von Lumen und innenliegender Trennschicht wird durch die Düsennadel der Hohlfadendüse eine Innenfüllung gefördert, die aus $\varepsilon$-Caprolactam/Wasser im Gewichtsverhältnis 55:45 besteht. Die ausgeformte Hohlfadenmembran wird in einem auf ca. 70 °C temperierten Wasser enthaltenden Fällbad ausgefällt und fixiert, mit ca. 90 °C warmem Wasser gewaschen und getrocknet. Es resultiert eine Hohlfadenmembran mit einem Lumendurchmesser von ca. 0,2 mm und einer Wanddicke von ca. 0,035 mm.

**Beispiel 2**

Es wird eine Hohlfadenmembran wie in Vergleichsbeispiel 2 hergestellt, jedoch mit dem Unterschied, dass in der Innenfüllung bezogen auf ihr Gewicht zusätzlich 0,5 Gew.% des Polyelektrolyten Acrylidone ACP 1005 (Fa. ISP) gelöst ist. Zur Herstellung der Innenfüllung wird zuerst das Gemisch aus $\varepsilon$-Caprolactam/Wasser vorgelegt und in diesem Gemisch das Acrylidone ACP 1005 gelöst.

In Tabelle 2 sind $UFR_{ALB}$ ($Q_F$ = 30 ml/(min·m$^2$)), $SK_{CC}$ und $SK_{ALB}$ der Hohlfadenmembranen aus Vergleichsbeispiel 2 und aus Beispiel 2 zusammengefasst.

Tabelle 2

| Membran aus | Polyelektrolyt in der Innenfüllung | $UFR_{ALB}$ ml/(h·M$^2$·mmHg) | $SK_{ALB}$ | $SK_{CC}$ |
|---|---|---|---|---|
| Vergleichsbeispiel 2 | - | 35,2 | 0,008 | 0,594 |
| Beispiel 2 | 0,5 Gew.% ACP 1005 | 41,6 | 0,000 | 0,944 |

Wie Tabelle 2 zeigt, entsteht durch den Zusatz des Polyelektrolyten zur Innenfüllung eine Hohlfadenmembran, die eine beträchtlich erhöhte Selektivität für die Trennung von Albumin und Cytochrom C aufweist.

**Vergleichsbeispiel 3**

Zur Herstellung einer Spinnlösung werden
19,0 Gew.% Polyethersulfon (Ultrason E 6020, Fa. BASF),
13,68 Gew.% Polyvinylpyrrolidon (PVP K30, Fa. ISP),
31,98 Gew.% $\varepsilon$-Caprolactam,
31,98 Gew.% $\gamma$-Butyrolacton und
3,36 Gew.% Glycerin
bei einer Temperatur von ca. 100 °C intensiv gemischt. Die resultierende Lösung wird auf ca. 60 °C abgekühlt, entgast, filtriert und dem Ringspalt einer Hohlfadendüse zugeführt, die auf 62 °C temperiert ist. Zur Ausbildung von Lumen und innenliegender Trennschicht wird durch die Düsennadel der Hohlfadendüse eine Innenfüllung gefördert, die aus $\varepsilon$-Caprolactam / Wasser im Gewichtsverhältnis 55:45 besteht. Die ausgeformte Hohlfadenmembran wird durch einen Klimakanal (Klima: ca. 55°C; 80 % relative Luftfeuchte) geführt, in einem auf ca. 55 °C temperierten Wasser enthaltenden Fällbad ausgefällt und fixiert, mit ca. 90 °C warmem Wasser gewaschen und getrocknet. Es resultiert eine Hohlfadenmembran mit einem Lumendurchmesser von ca. 0,2 mm und einer Wanddicke von ca. 0,035 mm.

**Beispiel 3**

Es wird eine Hohlfadenmembran wie in Vergleichsbeispiel 3 hergestellt, jedoch mit dem Unterschied, dass in der Innenfüllung bezogen auf ihr Gewicht zusätzlich 0,5 Gew.% des Polyelektrolyten Acrylidone ACP 1005 (Fa. ISP) gelöst ist. Zur Herstellung der Innenfüllung wird zuerst das Gemisch aus $\varepsilon$-Caprolactam/Wasser vorgelegt und in diesem Gemisch das Acrylidone ACP 1005 gelöst.

In Tabelle 3 sind $UFR_{ALB}$ ($Q_F$ = 10 ml/(min·m²)), $SK_{CC}$ und $SK_{ALB}$ der Hohlfadenmembranen aus Vergleichsbeispiel 3 und aus Beispiel 3 zusammengefasst.

Tabelle 3

| Membran aus | Polyelektrolyt in der Innenfüllung | $UFR_{ALB}$ ml/(h·m²·mmHg) | $SK_{ALB}$ | $SK_{CC}$ |
|---|---|---|---|---|
| Vergleichsbeispiel 3 | - | 13,1 | 0,002 | 0,305 |
| Beispiel 3 | 0,5 Gew.% ACP 1005 | 14,4 | 0,001 | 0,846 |

Wie Tabelle 3 zeigt, entsteht durch den Zusatz des Polyelektrolyten zur Innenfüllung eine Hohlfadenmembran, die eine beträchtlich erhöhte Selektivität für die Trennung von Albumin und Cytochrom C aufweist.

**Vergleichsbeispiel 4**

Zur Herstellung einer Spinnlösung werden
19,0 Gew.% Polyethersulfon (Ultrason E 6020, Fa. BASF),
13,3 Gew.% Polyvinylpyrrolidon (PVP K30, Fa. ISP),
63,64 Gew.% Dimethylacetamid (DMAC) und
4,06 Gew.% Wasser
bei einer Temperatur von ca. 70 °C intensiv gemischt. Die resultierende Lösung wird auf ca. 50 °C abgekühlt, entgast, filtriert und dem Ringspalt einer Hohlfadendüse zugeführt, die auf 40 °C temperiert ist. Zur Ausbildung von Lumen und innenliegender Trennschicht wird durch die Düsennadel der Hohlfadendüse eine Innenfüllung gefördert, die aus 62 Gewichtsteilen DMAC und 38 Gewichtsteilen Wasser besteht. Die ausgeformte Hohlfadenmembran wird durch einen Klimakanal (Klima: 50 °C; 90 % relative Luftfeuchte) geführt, in einem auf ca. 50 °C temperierten Wasser enthaltenden Fällbad ausgefällt und fixiert, in 90 °C warmem Wasser gewaschen und bei 90 °C getrocknet. Es resultiert eine Hohlfadenmembran mit einem Lumendurchmesser von 0,2 mm und einer Wanddicke von 0,035 mm.

**Beispiel 4**

Es wird eine Hohlfadenmembran wie in Vergleichsbeispiel 4 hergestellt, jedoch mit dem Unterschied, dass in der Innenfüllung bezogen auf ihr Gewicht zusätzlich 0,5 Gew.% des Polyelektrolyten Acrylidone ACP 1005 (Fa. ISP) gelöst ist. Zur Herstellung der Innenfüllung wird zuerst das Acrylidone ACP 1005 im Lösemittel verteilt, anschließend das Wasser hinzugegeben und bei ca. 70 °C eine homogene Lösung hergestellt. Die Lösung wurde schließlich auf 30 °C abgekühlt.

In Tabelle 4 sind $UFR_{ALB}$ ($Q_F$ = 30 ml/(min·m²)), $SK_{CC}$ und $SK_{ALB}$ der Hohlfadenmembranen aus Vergleichsbeispiel 4 und aus Beispiel 4 zusammengefasst.

Tabelle 4

| Membran aus | Polyelektrolyt in der Innenfüllung | $UFR_{ALB}$ ml/(h·m²·mmHg) | $SK_{ALB}$ | $SK_{CC}$ |
|---|---|---|---|---|
| Vergleichsbeispiel 4 | - | 48,0 | 0,005 | 0,604 |
| Beispiel 4 | 0,5 Gew.% ACP 1005 | 48,9 | 0,001 | 0,946 |

Wie Tabelle 4 zeigt, entsteht durch den Zusatz des Polyelektrolyten zur Innenfüllung eine Hohlfadenmembran, die eine beträchtlich erhöhte Selektivität für die Trennung von Albumin und Cytochrom C aufweist.

**Vergleichsbeispiel 5**

Zur Herstellung einer Spinnlösung werden
19,0 Gew.% Polyethersulfon (Ultrason E 6020, Fa. BASF),
13,3 Gew.% Polyvinylpyrrolidon (PVP K30, Fa. ISP),
62,96 Gew.% N-Methylpyrrolidon (NMP) und
4,74 Gew.% Wasser
bei einer Temperatur von ca. 70 °C intensiv gemischt und gelöst. Die resultierende Lösung wird auf ca. 60 °C abgekühlt, entgast, filtriert und dem Ringspalt einer Hohlfadendüse zugeführt, die auf 60 °C temperiert ist. Zur Ausbildung von Lumen und innenliegender Trennschicht wird durch die Düsennadel der Hohlfadendüse eine Innenfüllung gefördert, die aus 50 Gewichtsteilen NMP und 50 Gewichtsteilen Wasser besteht. Die ausgeformte Hohlfadenmembran wird durch einen Klimakanal (Klima: 50 °C; 90 % relative Luftfeuchte) geführt und in einem auf ca. 70 °C temperierten Wasser enthaltenden Fällbad ausgefällt und fixiert sowie anschließend gewaschen und getrocknet. Es resultiert eine Hohlfadenmembran mit einem Lumendurchmesser von 0,2 mm und einer Wanddicke von 0,035 mm.

**Beispiel 5**

Es wird eine Hohlfadenmembran wie in Vergleichsbeispiel 5 hergestellt, jedoch mit dem Unterschied, dass in der Innenfüllung bezogen auf ihr Gewicht zusätzlich 0,5 Gew.% des Polyelektrolyten Acrylidone ACP 1005 (Fa. ISP) gelöst ist. Zur Herstellung der Innenfüllung wird zuerst das Acrylidone ACP 1005 im Lösemittel verteilt, anschließend das Wasser hinzugegeben und bei ca. 70 °C eine homogene Lösung hergestellt. Die Lösung wurde schließlich auf 30 °C abgekühlt.

In Tabelle 5 sind $UFR_{ALB}$ ($Q_F$ = 30 ml/(min·m²)), $SK_{CC}$ und $SK_{ALB}$ der Hohlfadenmembranen aus Vergleichsbeispiel 5 und aus Beispiel 5 zusammengefasst.

Tabelle 5

| Membran aus | Polyelektrolyt in der Innenfüllung | $UFR_{ALB}$ ml/(h·m²·mmHg) | $SK_{ALB}$ | $SK_{CC}$ |
|---|---|---|---|---|
| Vergleichsbeispiel 5 | - | 42,4 | 0,006 | 0,560 |
| Beispiel 5 | 0,5 Gew.% ACP 1005 | 42,7 | 0,002 | 0,932 |

Wie Tabelle 5 zeigt, entsteht durch den Zusatz des Polyelektrolyten zur Innenfüllung eine Hohlfadenmembran, die eine beträchtlich erhöhte Selektivität für die Trennung von Albumin und Cytochrom C aufweist.

**Vergleichsbeispiel 6**

Zur Herstellung einer Spinnlösung werden

19,0 Gew.% Polyethersulfon (Ultrason E 6020, Fa. BASF),
4,75 Gew.% Polyvinylpyrrolidon (PVP K90, Fa. ISP),
68,62 Gew.% Dimethylacetamid (DMAC) und
7,63 Gew.% Glycerin

bei einer Temperatur von ca. 70 °C intensiv gerührt. Die resultierende Lösung wird auf ca. 50 °C abgekühlt, entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 47,5 Gewichtsteilen DMAC, 47,5 Gewichtsteilen Wasser und 5 Gewichtsteilen Glycerin besteht. Die ausgeformte Hohlfadenmembran wird durch einen Klimakanal (Klima: 50 °C; 90 % relative Luftfeuchte) geführt und in einem auf 70 °C temperierten Wasser enthaltenden Fällbad ausgefällt und fixiert. Die so erhaltene Hohlfasermembran wird anschließend mit ca. 90 °C warmem Wasser gewaschen und bei ca. 90 °C getrocknet. Es resultiert eine Hohlfadenmembran mit einem Lumendurchmesser von 0,2 mm und einer Wanddicke von 0,035 mm.

**Beispiel 6**

Es wird eine Hohlfadenmembran wie in Vergleichsbeispiel 6 hergestellt, jedoch mit dem Unterschied, dass in der Innenfüllung bezogen auf ihr Gewicht zusätzlich 0,5 Gew.% des Polyelektrolyten Acrylidone ACP 1005 (Fa. ISP) gelöst ist. Zur Herstellung der Innenfüllung wird zuerst das Acrylidone ACP 1005 im Lösemittel verteilt, anschließend das Wasser hinzugegeben und bei ca. 70 °C eine homogene Lösung hergestellt. Die Lösung wurde schließlich auf 30 °C abgekühlt.

In Tabelle 6 sind $UFR_{ALB}$ ($Q_F$ = 30 ml/(min·m²)), $SK_{CC}$ und $SK_{ALB}$ der Hohlfadenmembranen aus Vergleichsbeispiel 6 und aus Beispiel 6 zusammengefasst.

Tabelle 6

| Membran aus | Polyelektrolyt in der Innenfüllung | $UFR_{ALB}$ ml/(h·M²·mmHg) | $SK_{ALB}$ | $SK_{CC}$ |
|---|---|---|---|---|
| Vergleichsbeispiel 6 | - | 36,3 | 0,003 | 0,670 |
| Beispiel 6 | 0,5 Gew.% ACP 1005 | 35,7 | 0,002 | 0,860 |

Wie Tabelle 6 zeigt, entsteht durch den Zusatz des Polyelektrolyten zur Innenfüllung eine Hohlfadenmembran, die eine erhöhte Selektivität für die Trennung von Albumin und Cytochrom C aufweist.

**Vergleichsbeispiel 7**

Zur Herstellung einer Spinnlösung werden
19,0 Gew.% Polyethersulfon (Ultrason E 6020, Fa. BASF),
4,75 Gew.% Polyvinylpyrrolidon (PVP K90, Fa. ISP),
68,62 Gew.% Dimethylacetamid (DMAC) und
7,63 Gew.% Glycerin

bei einer Temperatur von ca. 70 °C intensiv gerührt. Die resultierende Lösung wird auf ca. 50 °C abgekühlt, entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 30 Gewichtsteilen DMAC, 65 Gewichtsteilen Wasser und 5 Gewichtsteilen Glycerin besteht. Die ausgeformte Hohlfadenmembran wird durch einen Klimakanal (Klima: 50 °C; 90 % relative Luftfeuchte) geführt und in einem auf 70 °C temperierten Wasser enthaltenden Fällbad ausgefällt und fixiert. Die so erhaltene Hohlfasermembran wird anschließend mit ca. 90 °C warmem Wasser gewaschen und bei ca. 90 °C getrocknet. Es resultiert eine Hohlfadenmembran mit einem Lumendurchmesser von 0,2 mm und einer Wanddicke von 0,035 mm.

**Beispiel 7**

Es wird eine Hohlfadenmembran wie in Vergleichsbeispiel 7 hergestellt, jedoch mit dem Unterschied, dass in der Innenfüllung bezogen auf ihr Gewicht zusätzlich 0,5 Gew.% des Polyelektrolyten Acrylidone ACP 1005 (Fa. ISP) gelöst ist. Zur Herstellung der Innenfüllung wird zuerst das Acrylidone ACP 1005 im Lösemittel verteilt, anschließend das Wasser hinzugegeben und bei ca. 70 °C eine homogene Lösung hergestellt. Die Lösung wurde schließlich auf 30 °C abgekühlt.
In Tabelle 7 sind $UFR_{ALB}$ ($Q_F$ = 10 ml/(min·m²)), $SK_{CC}$ und $SK_{ALB}$ der Hohlfadenmembranen aus Vergleichsbeispiel 7 und aus Beispiel 7 zusammengefasst.

Tabelle 7

| Membran aus | Polyelektrolyt in der Innenfüllung | $UFR_{ALB}$ ml/(h·m²·mmHg) | $SK_{ALB}$ | $SK_{CC}$ |
|---|---|---|---|---|
| Vergleichsbeispiel 7 | - | 11,7 | 0,002 | 0,211 |
| Beispiel 7 | 0,5 Gew.% ACP 1005 | 12,6 | 0,001 | 0,830 |

Wie Tabelle 7 zeigt, entsteht durch den Zusatz des Polyelektrolyten zur Innenfüllung eine Hohlfadenmembran, die eine beträchtlich erhöhte Selektivität für die Trennung von Albumin und Cytochrom C aufweist.

**Vergleichsbeispiel 8**

Aus
19,0 Gew.% Polysulfon (Ultrason S 6010, Fa. BASF),
13,3 Gew.% Polyvinylpyrrolidon (PVP K30, Fa. ISP),
65,87 Gew.% N-Methylpyrrolidon (NMP) und
1,83 Gew.% Wasser

wird eine homogene Spinnlösung hergestellt. Hierzu wird das Polysulfon zunächst im überwiegenden Teil des NMP bei einer Temperatur von 70 °C eingerührt, anschließend bei 90 °C gelöst, und danach das PVP K30 unter Rühren zugegeben und ebenfalls gelöst. Die resultierende Lösung wird auf 50 °C abgekühlt. Anschließend werden das Wasser und die restliche Menge NMP zugegeben. Die resultierende Lösung wird entgast, filtriert und dem Ringspalt einer Hohlfadendüse zugeführt, die auf 40 °C temperiert ist. Zur Ausbildung von Lumen und innenliegender Trennschicht wird durch die Düsennadel der Hohlfadendüse eine Innenfüllung gefördert, die aus 60 Gewichtsteilen NMP und 40 Gewichtsteilen Wasser besteht. Die ausgeformte Hohlfadenmembran wird durch einen Klimakanal (Klima: 50 °C; 90 % relative Luftfeuchte) geführt und in einem auf 70 °C temperierten Wasser enthaltenden Fällbad ausgefällt und fixiert. Anschließend wird die Membran gewaschen und getrocknet. Es resultiert eine Hohlfadenmembran mit einem Lumendurchmesser von 0,2 mm und einer Wanddicke von 0,035 mm.

**Beispiel 8**

Es wird eine Hohlfadenmembran wie in Vergleichsbeispiel 8 hergestellt, jedoch mit dem Unterschied, dass in der Innenfüllung bezogen auf ihr Gewicht zusätzlich 0,5 Gew.% des Polyelektrolyten Acrylidone ACP 1005 (Fa. ISP) gelöst ist. Zur Herstellung der Innenfüllung wird zuerst das Acrylidone ACP 1005 im Lösemittel verteilt, anschließend das Wasser hinzugegeben und bei ca. 70 °C eine homogene Lösung hergestellt. Die Lösung wurde schließlich auf 30 °C abgekühlt.

In Tabelle 8 sind $UFR_{ALB}$ ($Q_F$ = 30 ml/(min·m$^2$)), $SK_{CC}$ und $SK_{ALB}$ der Hohlfadenmembranen aus Vergleichsbeispiel 8 und aus Beispiel 8 zusammengefasst.

Tabelle 8

| Membran aus | Polyelektrolyt in der Innenfüllung | $UFR_{ALB}$ ml/(h·m$^2$·mmHg) | $SK_{ALB}$ | $SK_{CC}$ |
|---|---|---|---|---|
| Vergleichsbeispiel 8 | - | 21,0 | 0,003 | 0,490 |
| Beispiel 8 | 0,5 Gew.% ACP 1005 | 25,0 | 0,001 | 0,811 |

Wie Tabelle 8 zeigt, entsteht durch den Zusatz des Polyelektrolyten zur Innenfüllung eine Hohlfadenmembran, die eine beträchtlich erhöhte Selektivität für die Trennung von Albumin und Cytochrom C aufweist, wobei Ultrafiltrationsrate sogar deutlich zunimmt.

**Vergleichsbeispiel 9**

Aus
19,0 Gew.% Polyetherimid (Ultem 1010/1000, Fa. GE),
13,3 Gew.% Polyvinylpyrrolidon (PVP K30, Fa. ISP) und
67,7 Gew.% N-Methylpyrrolidon (NMP)
wird eine homogene Spinnlösung hergestellt. Hierzu wird das Polyetherimid zunächst bei einer Temperatur von 70 °C eingerührt, anschließend bei 90°C gelöst, und danach das PVP K30 unter Rühren zugegeben und ebenfalls gelöst. Die so erhaltene Lösung wird auf 50 °C abgekühlt. Die resultierende Lösung wird filtriert und dem Ringspalt einer Hohlfadendüse zugeführt, die auf 40 °C temperiert ist. Zur Ausbildung von Lumen und innenliegender Trennschicht wird durch die Düsennadel der Hohlfadendüse eine Innenfüllung gefördert, die aus 75 Gewichtsteilen NMP und 25 Gewichtsteilen Wasser besteht. Die ausgeformte Hohlfadenmembran wird durch einen Klimakanal (Klima: 50 °C; 90 % relative Luftfeuchte) geführt und in einem auf 70 °C temperierten Wasser enthaltenden Fällbad ausgefällt und fixiert. Nach Waschen und Trocknen resultiert eine Hohlfadenmembran mit einem Lumendurchmesser von 0,2 mm und einer Wanddicke von 0,035 mm.

**Beispiel 9**

Es wird eine Hohlfadenmembran wie in Vergleichsbeispiel 9 hergestellt, jedoch mit dem Unterschied, dass in der Innenfüllung bezogen auf ihr Gewicht zusätzlich 0,5 Gew.% des Polyelektrolyten Acrylidone ACP 1005 (Fa. ISP) gelöst ist. Zur Herstellung der Innenfüllung wird zuerst das Acrylidone ACP 1005 in NMP verteilt, anschließend das Wasser zugegeben und bei ca. 70 °C eine homogene Lösung hergestellt.

In Tabelle 9 sind $UFR_{ALB}$ ($Q_F$ = 30 ml/(min·m$^2$)), $SK_{CC}$ und $SK_{ALB}$ der Hohlfadenmembranen aus Vergleichsbeispiel 9 und aus Beispiel 9 zusammengefasst.

Tabelle 9

| Membran aus | Polyelektrolyt in der Innenfüllung | $UFR_{ALB}$ ml/(h·m$^2$·mmHg) | $SK_{ALB}$ | $SK_{CC}$ |
|---|---|---|---|---|
| Vergleichsbeispiel 9 | - | 36,0 | 0,003 | 0,690 |
| Beispiel 9 | 0,5 Gew.% ACP 1005 | 30,5 | 0,001 | 0,840 |

Wie Tabelle 9 zeigt, entsteht durch den Zusatz des Polyelektrolyten zur Innenfüllung eine Hohlfadenmembran, die eine beträchtlich erhöhte Selektivität für die Trennung von Albumin und Cytochrom C aufweist.

**Vergleichsbeispiel 10**

Aus
19,0 Gew.% Polyphenylensulfon (Radel R 5000NT, Fa. Solvay),
13,3 Gew.% Polyvinylpyrrolidon (PVP K30, Fa. ISP),
64,32 Gew.% N-Methylpyrrolidon (NMP) und
3,38 Gew.% Wasser
wird eine homogene Spinnlösung hergestellt. Hierzu wird das Polyphenylensulfon zunächst im überwiegenden Teile des NMP bei einer Temperatur von 70 °C eingerührt, anschließend bei 90 °C gelöst, und danach das PVP K30 unter Rühren zugegeben und ebenfalls gelöst. Die resultierende Lösung wird auf 50 °C abgekühlt. Anschließend werden das Wasser und die restliche Menge NMP zugegeben und die resultierende Lösung intensiv gerührt. Die homogene Lösung wird entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 63 Gewichtsteilen NMP und 37 Gewichtsteilen Wasser besteht. Die ausgeformte Hohlfadenmembran wird durch einen Klimakanal (Klima: 50 °C; 90 % relative Luftfeuchte) geführt und in einem auf 70 °C temperierten Wasser enthaltenden Fällbad ausgefällt und fixiert. Anschließend wird die Membran gewaschen und getrocknet. Es resultiert eine Hohlfadenmembran mit einem Lumendurchmesser von 0,2 mm und einer Wanddicke von 0,035 mm.

**Beispiel 10**

Es wird eine Hohlfadenmembran wie in Vergleichsbeispiel 10 hergestellt, jedoch mit dem Unterschied, dass in der Innenfüllung bezogen auf ihr Gewicht zusätzlich 0,5 Gew.% des Polyelektrolyten Acrylidone ACP 1005 (Fa. ISP) gelöst ist. Zur Herstellung der Innenfüllung wird zuerst das Acrylidone ACP 1005 im NMP verteilt, anschließend das Wasser hinzugegeben und bei ca. 70 °C eine homogene Lösung hergestellt. Die Lösung wurde schließlich auf 30 °C abgekühlt.
In Tabelle 10 sind $UFR_{ALB}$ ($Q_F$ = 30 ml/(min·m²)), $SK_{CC}$ und $SK_{ALB}$ der Hohlfadenmembranen aus Vergleichsbeispiel 10 und aus Beispiel 10 zusammengefasst.

Tabelle 10

| Membran aus | Polyelektrolyt in der Innenfüllung | $UFR_{ALB}$ ml/(h·m²·mmHg) | $SK_{ALB}$ | $SK_{CC}$ |
|---|---|---|---|---|
| Vergleichsbeispiel 10 | - | 30,7 | 0,001 | 0,470 |
| Beispiel 10 | 0,5 Gew.% ACP 1005 | 33,3 | 0,000 | 0,840 |

Wie Tabelle 10 zeigt, entsteht durch den Zusatz des Polyelektrolyten zur Innenfüllung eine Hohlfadenmembran, die eine beträchtlich erhöhte Selektivität für die Trennung von Albumin und Cytochrom C aufweist, wobei die Ultrafiltrationsrate sogar leicht erhöht ist.

**Vergleichsbeispiel 11**

Zur Herstellung einer Spinnlösung werden in einem Rührbehälter
19,0 Gew.% Polyethersulfon (Ultrason E 6020, Fa. BASF),
13,3 Gew.% Polyvinylpyrrolidon (PVP K30, Fa. ISP),
62,96 Gew.% N-Methylpyrrolidon (NMP) und
4,74 Gew.% Wasser
bei einer Temperatur von ca. 70°C intensiv gerührt. Die resultierende Lösung wird auf ca. 55 °C abgekühlt, entgast, bei 55 °C filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 54 Gewichtsteilen NMP und 46 Gewichtsteilen Wasser besteht. Die ausgeformte Hohlfadenmembran wird durch einen Klimakanal (Klima: 50 °C; 90 % relative Luftfeuchte) geführt und in einem auf ca. 70 °C temperierten Wasser enthaltenden Fällbad ausgefällt. Nach Waschen mit ca. 85 °C warmem Wasser und Trocknen mit Heißluft resultiert eine Hohlfadenmembran mit einem Lumendurchmesser von 0,2 mm und einer Wanddicke von 0,035 mm.

**Beispiele 11a-e**

Es werden Hohlfadenmembranen wie in Vergleichsbeispiel 11 hergestellt, jedoch mit dem Unterschied, dass in der Innenfüllung bezogen auf ihr Gewicht zusätzlich jeweils 0,01 bis 0,25 Gew.% des Polyelektrolyten Rohagit S hv (Fa. Degussa / Röhm) gelöst ist. Zur Herstellung der Innenfüllung wird jeweils zuerst das Rohagit S hv im NMP verteilt, nach Zugabe von Wasser bei ca. 70 °C gelöst und anschließend auf 30 °C abgekühlt.

In Tabelle 11 sind $UFR_{ALB}$ ($Q_F$ = 30 ml/(min·m²)), $SK_{CC}$ und $SK_{ALB}$ der Hohlfadenmembranen aus Vergleichsbeispiel 11 und aus den Beispielen 11a-e zusammengefasst.

Tabelle 11

| Membran aus | Polyelektrolyt in der Innenfüllung | $UFR_{ALB}$ ml/(h·m²·mmHg) | $SK_{ALB}$ | $SK_{CC}$ |
|---|---|---|---|---|
| Vergleichsbeisp. 11 | - | 31,5 | 0,003 | 0,640 |
| Beispiel 11a | 0,01 Gew.% Rohagit S hv | 32,9 | 0,002 | 0,820 |
| Beispiel 11b | 0,025 Gew.% Rohagit Shv | 32,7 | 0,001 | 0,935 |
| Beispiel 11c | 0,05 Gew.% Rohagit S hv | 31,1 | 0,001 | 0,960 |
| Beispiel 11d | 0,1 Gew.% Rohagit S hv | 33,1 | 0,001 | 0,970 |
| Beispiel 11e | 0,25 Gew.% Rohagit S hv | 32,9 | 0,001 | 0,970 |

Wie Tabelle 11 zeigt, entstehen durch den Zusatz des Polyelektrolyten zur Innenfüllung Hohlfadenmembranen, die eine beträchtlich erhöhte Selektivität für die Trennung von Albumin und Cytochrom C aufweist.

**Vergleichsbeispiel 12**

Zur Herstellung einer Spinnlösung werden in einem Rührbehälter

19,0 Gew.% Polyethersulfon (Ultrason E 6020, Fa. BASF),

13,3 Gew.% Polyvinylpyrrolidon (PVP K30, Fa. ISP),

62,96 Gew.% N-Methylpyrrolidon (NMP) und

4,74 Gew.% Wasser

bei einer Temperatur von ca. 70°C intensiv gerührt. Die resultierende Lösung wird auf ca. 50 °C abgekühlt, entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 54 Gewichtsteilen NMP und 46 Gewichtsteilen Wasser besteht. Die ausgeformte Hohlfadenmembran wird durch einen Klimakanal (Klima: 50 °C; 90 % relative Luftfeuchte) geführt und in einem auf ca. 63 °C temperierten Wasser enthaltenden Fällbad ausgefällt. Nach Waschen mit 85 °C warmem Wasser und Trocknen mit Heißluft resultiert eine Hohlfadenmembran mit einem Lumendurchmesser von 0,2 mm und einer Wanddicke von 0,03 mm.

**Beispiele 12a-e**

Es werden Hohlfadenmembranen wie in Vergleichsbeispiel 12 hergestellt, jedoch mit dem Unterschied, dass in der Innenfüllung bezogen auf ihr Gewicht zusätzlich jeweils 0,01 bis 0,25 Gew.% des Polyelektrolyten Rohagit S ENV (Fa. Degussa/Röhm) gelöst ist. Rohagit S ENV ist ein Copolymer aus Methacrylsäure und Methylmethacrylat. Zur Herstellung der Innenfüllung wird jeweils zuerst das Rohagit S ENV im NMP verteilt, nach Zugabe von Wasser bei ca. 70 °C gelöst und anschließend auf 30 °C abgekühlt.

In Tabelle 12 sind $UFR_{ALB}$ ($Q_F$ = 30 ml/(min·m²)), $SK_{CC}$ und $SK_{ALB}$ der Hohlfadenmembranen aus Vergleichsbeispiel 12 und aus den Beispielen 12a-e zusammengefasst.

Tabelle 12

| Membran aus | Polyelektrolyt in der Innenfüllung | $UFR_{ALB}$ ml/(h·m²·mmHg) | $SK_{ALB}$ | $SK_{CC}$ |
|---|---|---|---|---|
| Vergleichsbeispiel 12 | - | 28,9 | 0,002 | 0,640 |
| Beispiel 12a | 0,01 Gew.% Rohagit S ENV | 26,5 | 0,002 | 0,690 |
| Beispiel 12b | 0,025 Gew.% Rohagit S ENV | 28,3 | 0,001 | 0,800 |
| Beispiel 12c | 0,05 Gew.% Rohagit S ENV | 28,3 | 0,001 | 0,875 |
| Beispiel 12d | 0,1 Gew.% Rohagit S ENV | 27,0 | 0,000 | 0,880 |
| Beispiel 12e | 0,25 Gew.% Rohagit S ENV | 27,3 | 0,001 | 0,890 |

Wie Tabelle 12 zeigt, entstehen durch den Zusatz des Polyelektrolyten zur Innenfüllung Hohlfadenmembranen, die eine beträchtlich erhöhte Selektivität für die Trennung von Albumin und Cytochrom C aufweist, wobei die Ultrafiltrationsrate etwas geringer ist.

**Vergleichsbeispiel 13**

Zur Herstellung einer Spinnlösung werden in einem Rührbehälter
19,0 Gew.% Polyethersulfon (Ultrason E 6020, Fa. BASF),
13,3 Gew.% Polyvinylpyrrolidon (PVP K30, Fa. ISP),
62,96 Gew.% N-Methylpyrrolidon (NMP) und
4,74 Gew.% Wasser
bei einer Temperatur von ca. 70°C intensiv gerührt. Die resultierende Lösung wird auf ca. 50 °C abgekühlt, entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 54 Gewichtsteilen NMP und 46 Gewichtsteilen Wasser besteht. Die ausgeformte Hohlfadenmembran wird durch einen Klimakanal (Klima: 50 °C; 90 % relative Luftfeuchte) geführt und in einem auf ca. 67 °C temperierten Wasser enthaltenden Fällbad ausgefällt. Nach Waschen mit 85 °C warmem Wasser und Trocknen mit Heißluft resultiert eine Hohlfadenmembran mit einem Lumendurchmesser von 0,2 mm und einer Wanddicke von 0,035 mm.

**Beispiele 13a-e**

Es werden Hohlfadenmembranen wie in Vergleichsbeispiel 13 hergestellt, jedoch mit dem Unterschied, dass in der Innenfüllung bezogen auf ihr Gewicht zusätzlich jeweils 0,01 bis 0,25 Gew.% des Polyelektrolyten Acrylidone ACP 1005 (Fa. ISP) gelöst ist. Zur Herstellung der Innenfüllung wird jeweils zuerst das Acrylidone ACP 1005 im Lösemittel verteilt, anschließend das Wasser hinzugegeben und bei ca. 70 °C eine homogene Lösung hergestellt. Die Lösung wurde schließlich auf 30 °C abgekühlt.

In Tabelle 13 sind $UFR_{ALB}$ ($Q_F$ = 30 ml/(min·m$^2$)), $SK_{CC}$ und $SK_{ALB}$ der Hohlfadenmembranen aus Vergleichsbeispiel 13 und aus den Beispielen 13a-e zusammengefasst.

Tabelle 13

| Membran aus | Polyelektrolyt in der Innenfüllung | $UFR_{ALB}$ ml/(h·m$^2$·mmHg) | $SK_{ALB}$ | $SK_{CC}$ |
|---|---|---|---|---|
| Vergleichsbeispiel 13 | - | 36,1 | 0,002 | 0,632 |
| Beispiel 13a | 0,01 Gew.% ACP 1005 | 42,5 | 0,004 | 0,784 |
| Beispiel 13b | 0,025 Gew.% ACP 1005 | 40,1 | 0,005 | 0,830 |
| Beispiel 13c | 0,05 Gew.% ACP 1005 | 39,6 | 0,005 | 0,889 |
| Beispiel 13d | 0,1 Gew.% ACP 1005 | 38,8 | 0,001 | 0,912 |
| Beispiel 13e | 0,25 Gew.% ACP 1005 | 33,6 | 0,000 | 0,968 |

Wie Tabelle 13 zeigt, entstehen durch den Zusatz des Polyelektrolyten zur Innenfüllung Hohlfadenmembranen, die eine beträchtlich erhöhte Selektivität für die Trennung von Albumin und Cytochrom C aufweist, wobei die Ultrafiltrationsrate mit Ausnahme des Acrylidone ACP 1005 - Anteils von 0,25 Gew.-% sogar höher ist als ohne den Polyelektrolyten.

**Vergleichsbeispiele 14a-f**

Zur Herstellung einer Spinnlösung werden in einem Rührbehälter
19,0 Gew.% Polyethersulfon (Ultrason E 6020, Fa. BASF),
13,3 Gew.% Polyvinylpyrrolidon (PVP K30, Fa. ISP),
62,96 Gew.% N-Methylpyrrolidon (NMP) und
4,74 Gew.% Wasser
bei einer Temperatur von ca. 70°C intensiv gerührt. Die resultierende Lösung wird auf ca. 50 °C abgekühlt, filtriert, entgast und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine aus NMP und Wasser bestehende Innenfüllung gefördert. Es werden sechs verschiedene Membranen hergestellt, wobei die Zusammensetzung der Innenfüllung stufenweise im Bereich NMP:Wasser von 48:52 bis 58:42 variiert wird, womit jeweils Gewichtsteile gemeint sind. Die jeweilige ausgeformte Hohlfadenmembran wird durch einen Klimakanal (Klima: 50 °C; 90 % relative Luftfeuchte) geführt und in einem auf ca. 70 °C temperierten Wasser enthaltenden Fällbad ausgefällt. Nach Waschen mit 80 °C warmem Wasser und Trocknen mit Heißluft resultieren Hohlfadenmembranen mit einem Lumendurchmesser von 0,2 mm und einer Wanddicke von 0,035 mm.

**Beispiele 14a-f**

Es werden Hohlfadenmembranen wie in Vergleichsbeispiel 14a-f hergestellt, jedoch mit dem Unterschied, dass in der Innenfüllung bezogen auf ihr Gewicht zusätzlich jeweils 0,1 Gew.% des Polyelektrolyten Rohagit S hv (Fa. Degussa/Röhm) gelöst ist. Zur Herstellung der Innenfüllung wird jeweils zuerst das Rohagit S hv im NMP verteilt, nach Zugabe von Wasser bei ca. 70 °C gelöst und anschließend auf 30 °C abgekühlt.

In Tabelle 14 sind $UFR_{ALB}$ ($Q_F$ = 30 ml/(min·m²)), $SK_{CC}$ und $SK_{ALB}$ der Hohlfadenmembranen aus den Vergleichsbeispielen 14a-f und aus den Beispielen 14a-f zusammengefasst.

Tabelle 14

| Membran aus | NMP:Wasser | $UFR_{ALB}$ ml/(h·m²·mmHg) | $SK_{ALB}$ | $SK_{CC}$ |
|---|---|---|---|---|
| Vergleichsbeispiel 14a | 48:52 | 26,3 | 0,001 | 0,550 |
| Vergleichsbeispiel 14b | 50:50 | 33,7 | 0,003 | 0,660 |
| Vergleichsbeispiel 14c | 52:48 | 36,5 | 0,009 | 0,740 |
| Vergleichsbeispiel 14d | 54:46 | 42,4 | 0,027 | 0,780 |
| Vergleichsbeispiel 14e | 56:44 | 45,9 | 0,047 | 0,810 |
| Vergleichsbeispiel 14f | 58:42 | 57,8 | 0,075 | 0,860 |
| | | | | |
| Beispiel 14a | 48:52 | 24,0 | 0,001 | 0,960 |
| Beispiel 14b | 50:50 | 30,0 | 0,000 | 0,920 |
| Beispiel 14c | 52:48 | 33,1 | 0,001 | 0,980 |
| Beispiel 14d | 54:46 | 42,5 | 0,002 | 0,980 |
| Beispiel 14e | 56:44 | 47,5 | 0,001 | 0,970 |
| Beispiel 14f | 58:42 | 52,4 | 0,000 | 0,950 |

Tabelle 14 zeigt, dass Membranen bei gleichem NMP:Wasser - Verhältnis eine erheblich höhere Selektivität für die Trennung von Albumin und Cytochrom C aufweisen, wenn bei der Membranherstellung der Innenfüllung lediglich 0,1 Gew.% des Polyelektrolyten Rohagit S hv zugesetzt wird.

**Vergleichsbeispiel 15**

Zur Herstellung einer Spinnlösung werden in einem Rührbehälter

19,0 Gew.% Polyethersulfon (Ultrason E 6020, Fa. BASF),

13,3 Gew.% Polyvinylpyrrolidon (PVP K30, Fa. ISP),

62,96 Gew.% N-Methylpyrrolidon (NMP) und

4,74 Gew.% Wasser

bei einer Temperatur von ca. 70°C intensiv gerührt. Die resultierende Lösung wird auf ca. 50 °C abgekühlt, entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 52 Gewichtsteilen NMP und 48 Gewichtsteilen Wasser besteht. Die ausgeformte Hohlfadenmembran wird durch einen Klimakanal (Klima: 50 °C; 90 % relative Luftfeuchte) geführt und in einem auf ca. 75 °C temperierten Wasser enthaltenden Fällbad ausgefällt. Nach Waschen mit 80 °C warmem Wasser und Trocknen mit Heißluft resultiert eine Hohlfadenmembran mit einem Lumendurchmesser von 0,2 mm und einer Wanddicke von 0,035 mm.

**Beispiel 15**

Es wird eine Hohlfadenmembran wie in Vergleichsbeispiel 15 hergestellt, jedoch mit dem Unterschied, dass in der Innenfüllung bezogen auf ihr Gewicht zusätzlich 0,25 Gew.% des Polyelektrolyten Rohagit ENV (Fa. Degussa/Röhm) gelöst ist. Zur Herstellung der Innenfüllung wird zuerst das Rohagit S ENV im NMP verteilt, nach Zugabe von Wasser bei ca. 70 °C gelöst und anschließend auf 30 °C abgekühlt.

In Tabelle 15 sind $UFR_{ALB}$ ($Q_F$ = 30 ml/(min·m$^2$)), $SK_{CC}$ und $SK_{ALB}$ der Hohlfadenmembranen aus Vergleichsbeispiel 15 und aus Beispiel 15 zusammengefasst.

Tabelle 15

| Membran aus | Polyelektrolyt in der Innenfüllung | $UFR_{ALB}$ ml/(h·m$^2$·mmHg) | $SK_{ALB}$ | $SK_{CC}$ |
|---|---|---|---|---|
| Vergleichsbeispiel 15 | - | 31,5 | 0,003 | 0,640 |
| Beispiel 15 | 0,25 Gew.% Rohagit ENV | 35,1 | 0,000 | 1,000 |

Wie Tabelle 15 zeigt, entsteht durch den Zusatz des Polyelektrolyten zur Innenfüllung eine Hohlfadenmembranen mit der bestmöglichen Selektivität für die Trennung von Albumin und Cytochrom C.

**Vergleichsbeispiel 16**

Zur Herstellung einer Spinnlösung werden in einem Rührbehälter
19,0 Gew.% Polyethersulfon (Ultrason E 6020, Fa. BASF),
13,3 Gew.% Polyvinylpyrrolidon (PVP K30, Fa. ISP),
62,96 Gew.% N-Methylpyrrolidon (NMP) und
4,74 Gew.% Wasser
bei einer Temperatur von ca. 70°C intensiv gerührt. Die resultierende Lösung wird auf ca. 50 °C abgekühlt, entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 56 Gewichtsteilen NMP und 44 Gewichtsteilen Wasser besteht. Die ausgeformte Hohlfadenmembran wird durch einen Klimakanal (Klima: 50 °C; 90 % relative Luftfeuchte) geführt und in einem auf ca. 75 °C temperierten Wasser enthaltenden Fällbad ausgefällt. Nach Waschen mit 80 °C warmem Wasser und Trocknen mit Heißluft resultiert eine Hohlfadenmembran mit einem Lumendurchmesser von 0,2 mm und einer Wanddicke von 0,035 mm.

**Beispiel 16**

Es wird eine Hohlfadenmembran wie in Vergleichsbeispiel 16 hergestellt, jedoch mit dem Unterschied, dass in der Innenfüllung zusätzlich 0,1 Gew.% des Polyelektrolyten Carbopol 980 (Fa. Noveon) gelöst ist. Carbopol 980 ist eine teilvernetzte Acrylsäure. Zur Herstellung der Innenfüllung wird zuerst das Carbopol 908 im NMP verteilt, anschließend das Wasser hinzugegeben und bei ca. 70 °C eine homogene Lösung hergestellt. Die Lösung wurde schließlich auf 30 °C abgekühlt.

In Tabelle 16 sind $UFR_{ALB}$ ($Q_F$ = 30 ml/(min·m$^2$)), $SK_{CC}$ und $SK_{ALB}$ der Hohlfadenmembranen aus Vergleichsbeispiel 16 und aus Beispiel 16 zusammengefasst.

Tabelle 16

| Membran aus | Polyelektrolyt in der Innenfüllung | $UFR_{ALB}$ ml/(h·m$^2$·mmHg) | $SK_{ALB}$ | $SK_{CC}$ |
|---|---|---|---|---|
| Vergleichsbeispiel 16 | - | 60,6 | 0,065 | 0,780 |
| Beispiel 16 | 0,1 Gew.% Carbopol 980 | 55,9 | 0,014 | 0,902 |

Wie Tabelle 16 zeigt, entsteht durch den Zusatz des Polyelektrolyten zur Innenfüllung eine Hohlfadenmembranen mit deutlich erhöhter Selektivität für die Trennung von Albumin und Cytochrom C, wobei die Ultrafiltrationsrate abnimmt.

**Vergleichsbeispiel 17**

Zur Herstellung einer Spinnlösung werden in einem Rührbehälter

19,0 Gew.% Polyethersulfon (Ultrason E 6020, Fa. BASF),
13,3 Gew.% Polyvinylpyrrolidon (PVP K30, Fa. ISP),
62,96 Gew.% N-Methylpyrrolidon (NMP) und
4,74 Gew.% Wasser

bei einer Temperatur von ca. 70°C intensiv gerührt. Die resultierende Lösung wird auf ca. 50 °C abgekühlt, entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 52 Gewichtsteilen NMP und 48 Gewichtsteilen Wasser besteht. Die ausgeformte Hohlfadenmembran wird durch einen Klimakanal (Klima: 50 °C; 90 % relative Luftfeuchte) geführt und in einem auf ca. 70 °C temperierten Wasser enthaltenden Fällbad ausgefällt. Nach Waschen mit 80 °C warmem Wasser und Trocknen mit Heißluft resultiert eine Hohlfadenmembran mit einem Lumendurchmesser von 0,2 mm und einer Wanddicke von 0,036 mm.

**Beispiel 17**

Es wird eine Hohlfadenmembran wie in Vergleichsbeispiel 17 hergestellt, jedoch mit dem Unterschied, dass in der Innenfüllung zusätzlich 0,075 Gew.% des Polyelektrolyten Carbopol 1382 (Fa. Noveon) gelöst ist. Carbopol 1382 ist eine teilvernetzte Acrylsäure. Zur Herstellung der Innenfüllung wird zuerst das Carbopol 1382 im NMP verteilt, anschließend das Wasser hinzugegeben und bei ca. 70 °C eine homogene Lösung hergestellt. Die Lösung wird schließlich auf 30 °C abgekühlt.

In Tabelle 17 sind $UFR_{ALB}$ ($Q_F$ = 10 ml/(min·m$^2$)), $SK_{CC}$ und $SK_{ALB}$ der Hohlfadenmembranen aus Vergleichsbeispiel 17 und aus Beispiel 17 zusammengefasst.

Tabelle 17

| Membran aus | Polyelektrolyt in der Innenfüllung | $UFR_{ALB}$ ml (h·m$^2$·mmHg) | $SK_{ALB}$ | $SK_{CC}$ |
|---|---|---|---|---|
| Vergleichsbeisp. 17 | - | 20,2 | 0,003 | 0,350 |
| Beispiel 17 | 0,075 Gew.% Carbopol 1382 | 23,2 | 0,001 | 0,658 |

Wie Tabelle 17 zeigt, entsteht durch den Zusatz des Polyelektrolyten zur Innenfüllung eine Hohlfadenmembranen mit deutlich erhöhter Selektivität für die Trennung von Albumin und Cytochrom C, wobei die Ultrafiltrationsrate zunimmt.

**Beispiel 18**

Zur Herstellung einer Spinnlösung werden
19,0 Gew.% Polyethersulfon (Ultrason E 6020, Fa. BASF),
13,3 Gew.% Polyvinylpyrrolidon (PVP K30, Fa. ISP),
62,96 Gew.% N-Methylpyrrolidon (NMP) und
4,74 Gew.% Wasser

bei einer Temperatur von ca. 60 °C intensiv gerührt. Die resultierende Lösung wird auf ca. 50 °C abgekühlt, entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 52 Gewichtsteilen NMP und 48 Gewichtsteilen Wasser und einem Zusatz von 0,1 Gew.% des Polyelektrolyten Carbopol 1382 (Fa. Noveon) bezogen auf das Gewicht der Innenfüllung besteht. Zur Herstellung der Innenfüllung wird das Carbopol 1382 zuerst in NMP dispergiert und nach Zugabe von Wasser bei ca. 70 °C gelöst. Die ausgeformte Hohlfadenmembran wird durch einen Klimakanal (Klima: 55 °C; 80 % relative Luftfeuchte) geführt und in einem auf ca. 71 °C temperierten Wasser enthaltenden Fällbad ausgefällt. Nach Waschen mit 90 °C warmem Wasser und Trocknen mit Heißluft resultiert eine Hohlfadenmembran mit einem Lumendurchmesser von 0,2 mm und einer Wanddicke von 0,03 m, deren $UFR_{ALB}$ ($Q_F$ = 30 ml/(min·m$^2$)), $SK_{CC}$ und $SK_{ALB}$ in Tabelle 18 dargestellt sind.

Tabelle 18

| Membran aus | Polyelektrolyt in der Innenfüllung | $UFR_{ALB}$ ml/(h·m$^2$·mmHg) | $SK_{ALB}$ | $SK_{CC}$ |
|---|---|---|---|---|
| Beispiel 18 | 0,1 Gew.% Carbopol 1382 | 35,82 | 0,002 | 0,956 |

**Beispiel 19a-b**

Zur Herstellung einer Spinnlösung werden
19,0 Gew.% Polyethersulfon (Ultrason E 6020, Fa. BASF),
13,3 Gew.% Polyvinylpyrrolidon (PVP K30, Fa. ISP),
62,96 Gew.% N-Methylpyrrolidon (NMP) und
4,74 Gew.% Wasser
bei einer Temperatur von ca. 60 °C intensiv gerührt. Die resultierende Lösung wird bei 60 °C entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 55,95 Gewichtsteilen NMP und 43,95 Gewichtsteilen Wasser und einem Zusatz von 0,1 Gew.% des Polyelektrolyten Styleze 2000 (Fa. ISP) (Beispiel 19a), bzw. aus 55,88 Gewichtsteilen NMP und 43,88 Gewichtsteilen Wasser und einem Zusatz von 0,25 Gew. % Styleze 2000 (Beispiel 19b) besteht. Zur Herstellung der Innenfüllung wird das Styleze 2000 zuerst in NMP eingerührt und nach Zugabe von Wasser bei 70 °C gelöst. Styleze 2000 ist ein Copolymer aus Acrylsäure, Vinylpyrrolidon und Laurylmethacrylat. Die ausgeformte Hohlfadenmembran wird durch einen Klimakanal (Klima: 55 °C; 70 % relative Luftfeuchte) geführt und in einem auf ca. 69 °C temperierten Wasser enthaltenden Fällbad ausgefällt. Nach Waschen mit 90 °C warmem Wasser und Trocknen mit Heißluft resultieren Hohlfadenmembranen mit einem Lumendurchmesser von 0,2 mm und einer Wanddicke von 0,03 mm, deren $UFR_{ALB}$ ($Q_F$ = 30 ml/(min·m$^2$)), $SK_{CC}$ und $SK_{ALB}$ in Tabelle 19 dargestellt sind.

Tabelle 19

| Membran aus | Polyelektrolyt in der Innenfüllung | $UFR_{ALB}$ ml/(h·m$^2$·mmHg) | $SK_{ALB}$ | $SK_{CC}$ |
|---|---|---|---|---|
| Beispiel 19a | 0,1 Gew.% Styleze 2000 | 36,04 | 0,001 | 0,931 |
| Beispiel 19b | 0,25 Gew.% Styleze 2000 | 38,09 | 0,001 | 0,937 |

**Vergleichsbeispiel 20**

Zur Herstellung einer Spinnlösung werden
19,0 Gew.% Polyethersulfon (Ultrason E 6020, Fa. BASF),
13,3 Gew.% Polyvinylpyrrolidon (PVP K30, Fa. ISP),
62,96 Gew.% N-Methylpyrrolidon (NMP) und
4,74 Gew.% Wasser
bei einer Temperatur von ca. 60 °C intensiv gerührt. Die resultierende Lösung wird bei ca. 60 °C abgekühlt, entgast, filtriert und dem Ringspalt einer Hohlfadendüse zugeführt, die auf 45 °C temperiert ist. Zur Ausbildung von Lumen und innenliegender Trennschicht wird durch die Düsennadel der Hohlfadendüse eine Innenfüllung gefördert, die aus 44 Gewichtsteilen NMP und 56 Gewichtsteilen Wasser besteht. Die ausgeformte Hohlfadenmembran wird durch einen Klimakanal (Klima: 55 °C; 70 % relative Luftfeuchte) geführt und in einem auf 58 °C temperierten Wasser enthaltenden Fällbad ausgefällt. Nach Waschen mit 90 °C warmem Wasser und Trocknen mit Heißluft resultiert eine Hohlfadenmembran mit einem Lumendurchmesser von 0,2 mm und einer Wanddicke von 0,03 mm.

**Beispiel 20**

Es wird eine Hohlfadenmembran wie in Vergleichsbeispiel 20 hergestellt, jedoch mit dem Unterschied, dass die Innenfüllung aus 43,88 Gewichtsteilen NMP und 55,88 Gewichtsteilen Wasser und einem Zusatz von 0,25 Gew.% Styleze 2000 besteht.
In Tabelle 20 sind $UFR_{ALB}$ ($Q_F$ = 10 ml/(min·m$^2$)), $SK_{ALB}$ und $SK_{CC}$ der Membranen von Vergleichsbeispiel 20 und Beispiel 20 zusammengefasst.

Tabelle 20

| Membran aus | Polyelektrolyt in der Innenfüllung | $UFR_{ALB}$ ml (h·m$^2$·mmHg) | $SK_{ALB}$ | $SK_{CC}$ |
|---|---|---|---|---|
| Vergleichsbeispiel 20 | - | 12,28 | 0,003 | 0,129 |
| Beispiel 20 | 0,25 Gew.% Styleze 2000 | 11,04 | 0,002 | 0,784 |

**Patentansprüche**

1. Verfahren zur Herstellung einer integral asymmetrischen Membran mit mindestens einer Trennschicht und einer an die Trennschicht angrenzenden Stützschicht umfassend die Schritte

   a) Herstellen einer Spinnlösung, umfassend ein membranbildendes Polymer und ein Lösungsmittelsystem,
   b) Umwandeln der Spinnlösung mit einem Formwerkzeug in einen Formkörper mit einer ersten und einer zweiten Oberfläche,
   c) Inkontaktbringen der ersten und/oder zweiten Oberfläche mit einem Fällungsmittelsystem, wodurch eine Membran ausgebildet wird, die an der ersten und/oder zweiten Oberfläche eine Trennschicht aufweist,
   d) Waschen und ggf. Trocknen der Membran,

   **dadurch gekennzeichnet, dass** in Schritt c) das Fällungsmittelsystem einen Polyelektrolyten mit negativen Festladungen umfasst.

2. Verfahren nach Anspruch 1, **dadurch gekennzeichnet, dass** der Polyelektrolyt mit negativen Festladungen ausgewählt ist aus der Gruppe der Polyphosphorsäuren, Polysulfonsäuren oder Polycarbonsäuren.

3. Verfahren nach Anspruch 2, **dadurch gekennzeichnet, dass** die Polycarbonsäuren Homo- oder Copolymere der Acrylsäure sind.

4. Verfahren nach einem oder mehreren der Ansprüche 1 bis 3, **durch gekennzeichnet, dass** der im Fällungsmittelsystem gelöste Polyelektrolyt im Kontakt mit der Spinnlösung ausfällt.

5. Verfahren nach einem oder mehreren der Ansprüche 1 bis 4, **dadurch gekennzeichnet, dass** der Gewichtsanteil des Polyelektrolyten mit negativen Festladungen, bezogen auf das Gewicht des Fällungsmittelsystems, 0,01 bis 10 Gew.-% beträgt.

6. Verfahren nach Ansprüche 5, **dadurch gekennzeichnet, dass** der Gewichtsanteil des Polyelektrolyten mit negativen Festladungen, bezogen auf das Gewicht des Fällungsmittelsystems, 0,05 bis 1 Gew.-% beträgt.

7. Verfahren nach einem oder mehreren der Ansprüche 1 bis 6, **dadurch gekennzeichnet, dass** in Schritt a) als membranbildendes Polymer ein cellulosisches Polymer eingesetzt wird.

8. Verfahren nach einem oder mehreren der Ansprüche 1 bis 6, **dadurch gekennzeichnet, dass** in Schritt a) als membranbildendes Polymer ein synthetisches Polymer eingesetzt wird.

9. Verfahren nach Anspruch 8, **dadurch gekennzeichnet, dass** das synthetische Polymer aus der Gruppe der Polysulfone, Polyphenylensulfone, Polyethersulfone, Polyarylethersulfone, Polyimide, Polyetherimide, Polycarbonate, Polyetherketone und Polyphenylensulfide oder aus der Gruppe der Modifikationen der genannten Polymere oder aus der Gruppe der Mischungen der genannten Polymere oder aus der Gruppe der Copolymeren aus den Monomeren der genannten Polymere ausgewählt ist.

10. Verfahren nach einem oder mehreren der Ansprüche 1 bis 9, **dadurch gekennzeichnet, dass** in Schritt b) als Formwerkzeug eine Hohlfaserdüse eingesetzt wird, welche die Spinnlösung in einen Hohlfaser-Formkörper mit einer Innenoberfläche als erster Oberfläche und einer Außenoberfläche als zweiter Oberfläche umwandelt.

11. Verfahren nach Anspruch 10, **dadurch gekennzeichnet, dass** in Schritt c) das Fällungsmittelsystem eine Innenfüllung ist, die mit der Innenoberfläche in Kontakt gebracht wird, wodurch eine Membran mit einer lumenseitigen Trennschicht ausgebildet wird.

12. Integral asymmetrische Membran mit mindestens einer Trennschicht und einer Stützschicht, **dadurch gekennzeichnet, dass** in der Trennschicht ein Polyelektrolyt mit negativen Festladungen physikalisch gebunden ist und dass die Stützschicht frei von Polyelektrolyt ist.

13. Membran nach Anspruch 12, **dadurch gekennzeichnet, dass** die Membran eine Hohlfasermembran mit lumenseitiger Trennschicht ist.

**14.** Verwendung der gemäß einem oder mehreren der Ansprüche 1 bis 11 hergestellten Membran oder der Membran gemäß einem oder beiden der Ansprüche 12 oder 13 zur Trennung von Proteinen.

**15.** Verwendung der gemäß einem oder mehreren der Ansprüche 1 bis 11 hergestellten Membran oder der Membran gemäß einem oder mehreren der Ansprüche 12 oder 13 zur chemischen Modifizierung mit einem Agens, das mit dem Polyelektrolyten mit negativer Festladung reagiert.

**Claims**

**1.** A method for production of an integrally asymmetric membrane with at least one separating layer and a supporting layer adjoining the separating layer, comprising the steps

  a) preparation of a spinning solution comprising a membrane-forming polymer and a solvent system,
  b) conversion of the spinning solution by means of a forming device into a shaped object with a first and a second surface,
  c) bringing of the first and/or second surface into contact with a precipitant system, resulting in the formation of a membrane having a separating layer on the first and/or second surface, and
  d) washing and, if necessary, drying of the membrane,

  **characterised in that** in step c) the precipitant system comprises a polyelectrolyte with negative fixed charges.

**2.** Method according to Claim 1, **characterised in that** the polyelectrolyte with negative fixed charges is chosen from the group of polyphosphoric acids, polysulfonic acids or polycarboxylic acids.

**3.** Method according to Claim 2, **characterised in that** the polycarboxylic acids are homo- or copolymers of acrylic acid.

**4.** Method according to one or more of Claims 1 to 3, **characterised in that** the polyelectrolyte dissolved in the precipitant system precipitates in contact with the spinning solution.

**5.** Method according to one or more of Claims 1 to 4, **characterised in that** the proportion by weight of the polyelectrolyte with negative fixed charges, relative to the weight of the precipitant system, is 0.01 to 10 wt.%.

**6.** Method according to Claim 5, **characterised in that** the proportion by weight of the polyelectrolyte with negative fixed charges, relative to the weight of the precipitant system, is 0.05 to 1 wt.%.

**7.** Method according to one or more of Claims 1 to 6, **characterised in that** in step a) a cellulosic polymer is used as the membrane-forming polymer.

**8.** Method according to one or more of Claims 1 to 6, **characterised in that** in step a) a synthetic polymer is used as the membrane-forming polymer.

**9.** Method according to Claim 8, **characterised in that** the synthetic polymer is chosen from the group of polysulfones, polyphenylene sulfones, polyethersulfones, polyaryl ether sulfones, polyimides, polyetherimides, polycarbonates, polyetherketones and polyphenylene sulfides, or from the group of modifications of the cited polymers, or from the group of mixtures of the cited polymers, or from the group of copolymers of the monomers of the cited polymers.

**10.** Method according to one or more of Claims 1 to 9, **characterised in that** in step b) the forming device used is a hollow-fibre die, which converts the spinning solution into a hollow-fibre shaped object with an inner surface as the first surface and an outer surface as the second surface.

**11.** Method according to Claim 10, **characterised in that** in step c) the precipitant system is an interior filler that is brought into contact with the inner surface, resulting in the formation of a membrane with a separating layer facing the lumen.

**12.** Integrally asymmetric membrane with at least one separating layer and a supporting layer, **characterised in that** a polyelectrolyte with negative fixed charges is physically bound in the separating layer and that the supporting layer is free from polyelectrolyte.

**13.** Membrane according to Claim 12, **characterised in that** the membrane is a hollow-fibre membrane with a separating layer facing the lumen.

**14.** Use of the membrane produced according to one or more of Claims 1 to 11, or of the membrane according to one or both of Claims 12 or 13, for separation of proteins.

**15.** Use of the membrane produced according to one or more of Claims 1 to 11, or of the membrane according to one or more of Claims 12 or 13, for chemical modification with an agent that reacts with the polyelectrolyte with negative fixed charges.


**Revendications**

**1.** Procédé de fabrication d'une membrane asymétrique d'un seul tenant, comportant au moins une couche séparatrice et une couche de support adjacente à la couche séparatrice, lequel procédé comporte les étapes suivantes :

a) préparer une solution de filature, comprenant un polymère formateur de membrane et un système solvant ;
b) faire de cette solution de filature, au moyen d'un outil de façonnage, un corps façonné doté d'une première surface et d'une deuxième surface ;
c) mettre cette première surface et/ou cette deuxième surface en contact avec un système précipitant, grâce à quoi il se forme une membrane qui comporte une couche séparatrice sur la première surface et/ou la deuxième surface ;
d) et laver la membrane, et en option, la faire sécher ;

et lequel procédé se **caractérise en ce que** le système précipitant employé dans l'étape (c) comprend un polyélectrolyte porteur de charges liées négatives.

**2.** Procédé conforme à la revendication 1, **caractérisé en ce que** le polyélectrolyte porteur de charges liées négatives est choisi dans l'ensemble formé par les polymères acides phosphoriques, les polymères acides sulfoniques et les polymères acides carboxyliques.

**3.** Procédé conforme à la revendication 2, **caractérisé en ce que** les polymères acides carboxyliques sont des homopolymères ou copolymères de l'acide acrylique.

**4.** Procédé conforme à l'une ou plusieurs des revendications 1 à 3, **caractérisé en ce que** le polyélectrolyte dissous dans le système précipitant précipite au contact de la solution de filature.

**5.** Procédé conforme à l'une ou plusieurs des revendications 1 à 4, **caractérisé en ce que** la quantité du polyélectrolyte porteur de charges liées négatives représente de 0,01 à 10 % du poids du système précipitant.

**6.** Procédé conforme à la revendication 5, **caractérisé en ce que** la quantité du polyélectrolyte porteur de charges liées négatives représente de 0,05 à 1 % du poids du système précipitant.

**7.** Procédé conforme à l'une ou plusieurs des revendications 1 à 6, **caractérisé en ce que** l'on utilise dans l'étape (a), en tant que polymère formateur de membrane, un polymère cellulosique.

**8.** Procédé conforme à l'une ou plusieurs des revendications 1 à 6, **caractérisé en ce que** l'on utilise dans l'étape (a), en tant que polymère formateur de membrane, un polymère synthétique.

**9.** Procédé conforme à la revendication 8, **caractérisé en ce que** le polymère synthétique a été choisi dans l'ensemble formé par les polysulfones, poly(phénylène sulfone), poly(éther sulfone), poly(aryl éther sulfone), polyimides, poly (éther imide), polycarbonates, poly(éther cétone) et poly(phénylène sulfure), ou dans l'ensemble formé par les dérivés modifiés de tels polymères, ou dans l'ensemble formé par les mélanges de tels polymères, ou dans l'ensemble formé par les copolymères obtenus à partir des monomères de tels polymères.

**10.** Procédé conforme à l'une ou plusieurs des revendications 1 à 9, **caractérisé en ce que** l'on utilise dans l'étape b), en tant qu'outil de façonnage, une filière à fibres creuses, qui permet de transformer la solution de filature en un corps façonné en forme de fibre creuse, doté d'une surface interne constituant la première surface, et d'une surface externe constituant la deuxième surface.

**11.** Procédé conforme à la revendication 10, **caractérisé en ce que** le système précipitant utilisé dans l'étape (c) est un remplissage intérieur que l'on met en contact avec la surface interne, de sorte qu'il se forme une membrane qui comporte une couche séparatrice située du côté de la lumière intérieure.

**12.** Membrane asymétrique d'un seul tenant, comportant au moins une couche séparatrice et une couche de support, **caractérisée en ce que** dans la couche séparatrice se trouve physiquement fixé un polyélectrolyte porteur de charges liées négatives, et **en ce que** la couche de support ne contient pas de polyélectrolyte.

**13.** Membrane conforme à la revendication 12, **caractérisée en ce qu'**il s'agit d'une membrane en forme de fibre creuse comportant une couche séparatrice située du côté de la lumière intérieure.

**14.** Utilisation, pour une séparation de protéines, d'une membrane fabriquée suivant un procédé conforme à l'une ou plusieurs des revendications 1 à 11, ou d'une membrane conforme à l'une des revendications 12 et 13 ou aux deux.

**15.** Utilisation d'une membrane fabriquée suivant un procédé conforme à l'une ou plusieurs des revendications 1 à 11, ou d'une membrane conforme à l'une des revendications 12 et 13 ou aux deux, pour une modification chimique réalisée avec un agent qui réagit avec le polyélectrolyte porteur de charges liées négatives.

EP 1 718 399 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0828553 B1
- EP 0361085 B1
- EP 0168783 B1
- EP 828553 A